(19) Europäisches Patentamt / European Patent Office / Office européen des brevets

(11) **EP 3 856 815 B1**

(12) **EUROPÄISCHE PATENTSCHRIFT**

(45) Veröffentlichungstag und Bekanntmachung des Hinweises auf die Patenterteilung:
**07.09.2022   Patentblatt 2022/36**

(21) Anmeldenummer: **19772742.3**

(22) Anmeldetag: **24.09.2019**

(51) Internationale Patentklassifikation (IPC):
*C08G 18/76* (2006.01)     *C08G 18/48* (2006.01)
*C08G 18/50* (2006.01)     *C08G 18/18* (2006.01)
*C08G 18/20* (2006.01)     *C08J 9/00* (2006.01)
*C08J 9/08* (2006.01)      *C08J 9/14* (2006.01)
*C08G 101/00* (2006.01)

(52) Gemeinsame Patentklassifikation (CPC):
**C08G 18/7664; C08G 18/1808; C08G 18/1816;
C08G 18/2036; C08G 18/4816; C08G 18/482;
C08G 18/4829; C08G 18/4845; C08G 18/4891;
C08G 18/5027; C08J 9/0023; C08J 9/0042;
C08J 9/08; C08J 9/141;** C08G 2110/0025;   (Forts.)

(86) Internationale Anmeldenummer:
**PCT/EP2019/075728**

(87) Internationale Veröffentlichungsnummer:
**WO 2020/064743 (02.04.2020 Gazette 2020/14)**

(54) **POLYOLKOMPONENTE UND IHRE VERWENDUNG ZUR HERSTELLUNG VON POLYURETHAN-HARTSCHAUMSTOFFEN**

POLYOL COMPONENTS AND USE OF SAME FOR PRODUCING POLYURETHANE SOLID FOAM MATERIALS

COMPOSÉ DE POLYOL ET SON UTILISATION POUR LA FABRICATION DE MOUSSES RIGIDES DE POLYURÉTHANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2018   EP 18196648**

(43) Veröffentlichungstag der Anmeldung:
**04.08.2021   Patentblatt 2021/31**

(73) Patentinhaber: **BASF SE**
**67056 Ludwigshafen am Rhein (DE)**

(72) Erfinder:
• **KLASSEN, Johann**
  **49448 Lemfoerde (DE)**
• **ZARBAKHSH, Sirus**
  **67056 Ludwigshafen (DE)**
• **WAGNER, Hendrik**
  **49448 Lemfoerde (DE)**

(74) Vertreter: **BASF IP Association**
**BASF SE**
**GBI-C006**
**67056 Ludwigshafen (DE)**

(56) Entgegenhaltungen:
EP-A1- 1 923 417       WO-A1-2014/079721
WO-A1-2017/072152     WO-A2-2012/126916

**(Forts. nächste Seite)**

(52) Gemeinsame Patentklassifikation (CPC): (Forts.)
C08G 2110/005

**Beschreibung**

Die Erfindung betrifft eine Polyolkomponente P), ein Verfahren zur Herstellung von Polyurethan-Hartschaumstoffen unter Verwendung der Polyolkomponente P) sowie Polyurethan-Hartschaumstoffe, die mit der Polyolkomponente P) hergestellt werden.

Polyurethan(PU)-Hartschaumstoffe können in bekannter Weise durch Umsetzung von organischen Polyisocyanaten mit einer oder mehreren Verbindungen mit mindestens zwei reaktiven Wasserstoffatomen, vorzugsweise Polyether-, Polyester- und/oder Polyetheresteralkohole (Polyole), in Gegenwart von Treibmitteln, Katalysatoren und gegebenenfalls Hilfsmitteln und/oder Zusatzstoffen hergestellt werden.

PU-Hartschaumstoffe werden häufig zur Herstellung von Kältegeräten verwendet. Dabei werden die Gehäuse der Kältegeräte üblicherweise mit dem Polyol-Isocyanat-Gemisch ausgeschäumt und der PU-Hartschaum in situ zwischen den beiden Abdeckungen, die jeweils die Innen- bzw. die Außenverkleidung des Kühlgeräts formen, gebildet. Um die Stabilität der so hergestellten Verbundstruktur zu gewährleisten, müssen die PU-Hartschaumstoffe mit der Außenverkleidung und der Innenverkleidung eine ausreichend feste Verbindung eingehen, d.h. die PU-Hartschaumstoffe müssen eine gute Haftung aufweisen. Für einen hohen Durchsatz beim Ausschäumschritt und damit einer hohen Produktivität ist ein gutes Entformungsverhalten des PU-Hartschaums wichtig. Dieses lässt sich beispielsweise daran erkennen, dass der frisch ausgehärtete PU-Hartschaum eine möglichst geringe Nachexpansion zeigt. Weiterhin muss der PU-Hartschaum natürlich eine möglichst gute Wärmedämmung zeigen. Gute Dämmeigenschaften zeigen zum Beispiel PU-Hartschäume, die unter Verwendung physikalischer Treibmittel wie Kohlenwasserstoffe, beispielsweise $C_5$-Kohlenwasserstoffe, insbesondere Cyclopentan, hergestellt werden. Dies setzt jedoch voraus, dass die zur Herstellung des PU-Hartschaum eingesetzten Polyolkomponenten eine gute Kompatibilität mit Kohlenwasserstoffen aufweisen. Insbesondere dieses kombinierte Eigenschaftsprofil wird durch die aus dem Stand der Technik Polyolkomponenten noch nicht ausreichend gewährleistet.

Üblicherweise werden zur Herstellung von PU-Hartschaumstoffen auf Isocyanatbasis Polyole mit hohen Funktionalitäten und niedrigem Molekulargewicht verwendet, um eine optimale Vernetzung der Schäume zu gewährleisten. Die vorzugsweise eingesetzten Polyetherpolyole haben zumeist eine Funktionalität von 4 bis 8 und eine Hydroxylzahl im Bereich von 300 bis 600, insbesondere von 400 bis 500 mg KOH/g. Es ist bekannt, dass Polyole mit sehr hoher Funktionalität und Hydroxylzahlen im Bereich von 300 bis 600 mg KOH/g eine sehr hohe Viskosität aufweisen. Weiterhin ist bekannt, dass derartige Polyole vergleichsweise polar sind und somit ein schlechtes Lösungsvermögen für übliche Treibmittel, insbesondere Kohlenwasserstoffe wie Pentane, insbesondere Cyclopentan, aufweisen. Um diesen Mangel zu beheben, werden der Polyolkomponente häufig Polyetheralkohole mit Funktionalitäten von 2 bis 4 und Hydroxylzahlen von 100 bis 250 mg KOH/g zugesetzt.

WO 2018/177941 A1beschreibt eine Polyolkomponente zur Herstellung von PU-Hartschaum enthaltend ein Polyetherpolyol mit hoher Funktionalität und einer Hydroxylzahl von 300 bis 500 mg KOH/g, ein Polyetherpolyol mit einer Funktionalität von 3 bis 5 und einer Hydroxylzahl von 100 bis 290 mg KOH/g sowie ein Polyetherpolyol mit einer Funktionalität von 3 bis 5 und einer Hydroxylzahl von 300 bis 500 mg KOH/g.

Aus WO 2017/072152 A1 ist eine Polyolkomponente zur Herstellung von PU-Hartschaum bekannt, die ein Polyetherpolyol mit hoher Funktionalität und einer Hydroxylzahl von 400 bis 520 mg KOH/g, ein Polyetherpolyol mit einer Funktionalität von 3,7 bis 4 und einer Hydroxylzahl von 300 bis 420 mg KOH/g, sowie ein Polyetheresterpolyol (Polyetheresterpolyole) enthält, das einen Fettsäuregehalt von 8 bis 17 Gew.-% aufweist.

EP 1923417 A1 betrifft ein Verfahren für die Herstellung von Polyetheresterpolyolen, bei dem Starterverbindungen mit Zerewitinoff-aktiven Wasserstoffatome mit Alkylenoxiden unter Basenkatalyse in Gegenwart von Fettsäureestern zu Polyetheresterpolyolen umgesetzt werden.

WO 2014/079271 A1 betrifft ein Polyetheresterpolyol mit einer OH-Zahl von 480 bis 580 mg KOH/g, enthaltend das Umsetzungsprodukt von mindestens einer Verbindung mit im Mittel 2,5 bis 8 OH- oder NH-Gruppen, mindestens einem Fettsäuretriglycerid und einem oder mehreren Alkylenoxiden mit 2 bis 4 C-Atomen.

WO 2012/126912 A2 offenbart einen Polyurethan-Schaumstoff, der durch Umsetzung von mindestens einem Polyetherpolyol, mindestens einem amingestartetes Polyetherpolyol, mindestens einem Polyesterpolyol und mindestens einem Polyisocyanat in Gegenwart mindestens eines Katalysators und mindestens einem Treibmittel erhältlich ist, wobei der Isocyanat-Index 140 bis 180 beträgt.

Aufgabe der vorliegenden Erfindung ist, eine Polyolkomponente bereit zu stellen, die gegenüber den im Stand der Technik bekannten Polyolkomponenten zu weiteren Verbesserungen der daraus hergestellten PU-Hartschäumen führt, insbesondere sollen PU-Hartschäume mit besseren Entformungszeiten in Kombination mit guten Haftungseigenschaften und guten Wärmedämmeigenschaften herstellbar sein. Zudem sollen die Polyolkomponenten eine gute Kompatibilität mit Kohlenwasserstoffen aufweisen.

Diese Aufgabe wird gelöst durch eine Polyolkomponente P) umfassend:

  a) 35 bis 70 Gew.-% eines oder mehrerer Polyetherpolyole A) mit einer OH-Zahl im Bereich von 300 bis 520 mg KOH/g ausgewählt aus Umsetzungsprodukten von Monosacchariden, Oligosacchariden, Polysacchariden, mehrwertige Alkoholen, Alkoxylierungsprodukten der vorgenannten Verbindungen oder Mischungen daraus mit Alkylenoxiden;

b) 5 bis 45 Gew.-% eines oder mehrerer Polyetherpolyole B) mit einer OH-Zahl im Bereich von 320 bis 500 mg KOH/g ausgewählt aus Umsetzungsprodukten von aromatischen Diaminen mit Alkylenoxid;

c) > 0 bis 30 Gew.-% eines oder mehrerer Polyetherpolyole C) mit einer OH-Zahl im Bereich von 100 bis 240 mg KOH/g ausgewählt aus Umsetzungsprodukten von Aminen, Mehrwertige Alkoholen oder Mischungen daraus mit Alkylenoxid;

d) 5 bis 40 Gew.-% eines oder mehrerer Polyetheresterpolyole D) mit einer OH-Zahl von 380 bis 480 mg KOH/g und einem Gehalt an Fettsäure von 5 bis 25 Gew.-%, bezogen auf die Polyetheresterpolyole D);

e) gegebenenfalls einen oder mehrere Katalysatoren E);

f) gegebenenfalls eine oder mehrere weiterer Komponenten F) ausgewählt aus Hilfsmitteln und Zusatzstoffen,

g) gegebenenfalls ein oder mehrere Treibmittel ausgewählt aus chemischen Treibmitteln G1) und physikalischen Treibmitteln G2);

wobei sich die Konzentrationsangaben in Gew.-% für A) bis D) auf die Gesamtmenge der Komponenten A) bis G1) der Polyolkomponente P) beziehen.

Des Weiteren wird die Aufgabe gelöst durch ein Verfahren zur Herstellung von Polyurethan-Hartschaumstoffen durch Umsetzung von

I) Di- oder Polyisocyanaten PI) oder Gemischen daraus mit

II) einer Polyolkomponente P).

Die Aufgabe wird ebenfalls durch einen Polyurethan-Hartschaumstoff gelöst, der durch das erfindungsgemäße Verfahren erhältlich ist sowie durch die Verwendung der erfindungsgemäßen Polyolkomponente P) zur Herstellung von Polyurethan-Hartschaumstoffen.

Die Aufgabe wird ebenfalls durch die Verwendung des durch das erfindungsgemäße Verfahren hergestellten Polyurethan-Schaumstoffes für Dämm- und Kühlanwendungen gelöst.

Mit der erfindungsgemäßen Polyolkomponente P) hergestellte PU-Hartschäume weisen sehr gute Entformungszeiten und gleichzeitig gute Haftungseigenschaften und eine gute Wärmedämmung auf.

Die Erfindung wird im Folgenden genauer beschrieben.

Die OH-Zahl (Hydroxylzahl) kann mittels gängiger Methoden bestimmt werden. Beispielsweise kann die OH-Zahl nach DIN 53240 (1971-12) bestimmt werden.

Die Funktionalität eines Polyols, insbesondere der erfindungsgemäß einzusetzenden Polyetherpolyole A), B) und C) sowie des Polyetheresterpolyols D) bedeutet im Rahmen der vorliegen Erfindung die Anzahl der mit Alkylenoxid reaktiven Wasserstoffatome pro mol Starterverbindung beziehungsweise pro mol Gemisch der Starterverbindungen vor dem Zeitpunkt der Alkylenoxid-Dosierung. Der Zeitpunkt der Alkylenoxid-Dosierung ist dabei der Beginn der Zugabe der Alkylenoxidkomponente zu der/den Starterverbindungen(en). Bei der Berechnung werden alle in der Startermischung vorhandenen und mit Alkylenoxid reaktiven Wasserstoff-Atome der Starterverbindung(en) berücksichtigt.

Die Funktionalität F im Sinne der vorliegenden Erfindung wird nach folgender Formel (I) berechnet:

$$F = \frac{\sum_{i=1}^{m} n_i \cdot f_i}{\sum_{i=1}^{m} n_i}$$

(I)

$n_i$ = mol Starter i

$f_i$ = Funktionalität Starter i

m = Anzahl Starter im Startergemisch

F = Funktionalität

Die Funktionalität F eines Polyols, das aus einem Gemisch aus zwei Starterverbindungen (m=2) hergestellt wurde, wird folgendermaßen berechnet:

F = (mol Starterverbindung A * Funktionalität Starterverbindung A + mol Starterverbindung B * Funktionalität Starterverbindung B)/(mol Starter A + mol Starter B).

Bei weiteren Startermolekülen ist die Formel entsprechend zu ergänzen. So weist beispielsweise ein Polyetherpolyol eine Funktionalität von 5,12 auf, wenn 626,48 mol Glycerin (Funktionalität 3), 559,74 mol Saccharose (Funktionalität 8) und 67,31 mol Dimethylethanolamin (Funktionalität 1) verwendet werden.

Die gemäß der vorstehend dargestellten Formel bestimmte Funktionalität F wird auch äquivalente Funktionalität genannt und ist dem Fachmann als gut zugängliche Methode zur Bestimmung der Funktionalität von Polyolen bekannt, siehe M. Ionescu "Chemistry and Technology of Polyols for Polyurethanes", 2005 Rapra Technolgy Limited, Seiten 34 bis 39.

Die oben erfindungsgemäß definierte Funktionalität der Polyetherpolyole A), B) und C) sowie des Polyetheresterpolyols D) kann von der Funktionalität nach Beginn der Zugabe wenigstens eines Alkylenoxids, d.h. während der Reaktion des wenigstens eines Alkylenoxids mit einer Starterverbindung oder des Reaktionsproduktes abweichen, da sich während der Reaktion Nebenprodukte wie Glykole und ungesättigte monofunktionelle Bestandteile bilden. Die Nebenreaktionen sind literaturbekannt. Die Funktionalität der Polyetherpolyole A), B) und C) sowie des Polyetheresterpolyols D) lässt sich somit auch als Funktionalität des für die Herstellung des jeweiligen Polyols eingesetzten Starters oder Startergemischs bezeichnen.

Gemäß der vorstehend gegebenen Definition der Funktionalität bedeutet beispielsweise "Polyetherpolyol mit einer Funktionalität im Bereich von 4,6 bis 6,5 ausgewählt aus Umsetzungsprodukten von Monosacchariden, Oligosacchariden, Polysacchariden, mehrwertigen Alkoholen, Alkoxylierungsprodukten der vorgenannten Verbindungen oder Mischungen daraus mit Alkylenoxiden", dass die zur Umsetzung mit den Alkylenoxiden eingesetzten Monosaccharide, Oligosaccharide, Polysaccharide, mehrwertigen Alkohole, Alkoxylierungsprodukte der vorgenannten Verbindungen oder Mischungen daraus eine äquivalente Funktionalität von 4,6 bis 6,5 gemäß Formel (I) aufweisen.

Ein Polyetherpolyol ist im Sinne der vorliegenden Erfindung eine organische Verbindung, die als funktionelle Gruppen zumindest Ether- und OH-Gruppen aufweist. Üblicherweise weist das Polyetherpolyol 2 bis 20 OH-Gruppen auf, vorzugsweise 2 bis 10 OH-Gruppen, besonders bevorzugt 2 bis 8 OH-Gruppen.

Ein Polyetheresterpolyol ist im Sinne der Erfindung eine organische Verbindung, die als funktionelle Gruppen zumindest Ether-, Ester- und OH-Gruppen aufweist. Üblicherweise weist das Polyesteretherpolyol 2 bis 20 OH-Gruppen auf, vorzugsweise 2 bis 10 OH-Gruppen, besonders bevorzugt 2 bis 8 OH-Gruppen.

Im Sinne der vorliegenden Erfindung sind die Grenzen der angegebenen Bereiche vorzugsweise miteingeschlossen. Daher sind beispielsweise in dem Bereich von 5,2 bis 6,4 die Werte 5,2 und 6,4 enthalten.

Die jeweiligen Polyetherpolyole A), B), C) und Polyetheresterpolyol D) sind gemäß der vorliegenden Erfindung voneinander verschieden.

Die Polyetherpolyole A), B) und C) sowie die Polyetheresterpolyole D) sind ausgewählt aus Umsetzungsprodukten verschiedener Starter mit Alkylenoxiden. Geeignete Alkylenoxide sind beispielsweise ausgewählt aus $C_2$-$C_4$-Alkylenoxiden. Diese umfassen Ethylenoxid, Propylenoxid, 1,2- und 2,3-Butylenoxid und Mischungen davon. Besonders bevorzugt sind Propylenoxid, Ethylenoxid und Mischungen davon. Die Alkylenoxide können einzeln, alternierend nacheinander oder als Mischungen verwendet werden.

Polyetherpolyol A)

Die Polyolkomponente P) umfasst eines oder mehrere Polyetherpolyole A) mit einer OH-Zahl im Bereich von 300 bis 520 mg KOH/g, vorzugsweise im Bereich von 390 bis 520 mg KOH/g.

Die Polyetherpolyole A) sind ausgewählt aus Umsetzungsprodukten von Monosacchariden, Oligosacchariden, Polysacchariden, mehrwertigen Alkoholen, Alkoxylierungsprodukten der vorgenannten Verbindungen oder Mischungen daraus mit Alkylenoxiden. Die erfindungsgemäß eingesetzten Monosaccharide, Oligosaccharide, Polysaccharide, mehrwertigen Alkohole sowie die Alkoxylierungsprodukte aus den vorgenannten Verbindungen enthalten mindestens zwei mit Alkylenoxiden reaktive OH-Gruppen und werden im Rahmen der vorliegenden Erfindung auch als Starterverbindung $S^{A)}$ oder Starter $S^{A)}$ bezeichnet. Die Starterverbindung umfasst die Begriffe Starterverbindung und Starterverbindungen. Bei der Umsetzung mit den Alkylenoxiden werden die Alkylenoxide an die Starterverbindung(en) angelagert, dies geschieht in der Regel unter Verwendung eines Katalysators. Diese Reaktion ist dem Fachmann an sich bekannt.

Bei den für die Polyetherpolyole A) als Starterverbindungen $S^{A)}$ verwendeten mehrwertigen Alkoholen handelt es sich vorzugsweise um organische Verbindungen mit 2 bis 20 OH-Gruppen, bevorzugt 2 bis 10 OH-Gruppen und besonders bevorzugt mit 3 bis 8 OH-Gruppen. Sie sind vorzugsweise ausgewählt aus Monomeren, Dimeren und Trimeren. Das Molekulargewicht beträgt vorzugsweise bis zu 400 g/mol, bevorzugt bis zu 300 g/mol, und besonders bevorzugt bis zu 200 g/mol. Beispiele für die als Starterverbindungen verwendeten mehrwertigen Alkohole sind Zuckeralkohole wie Sorbit und Mannit, die monomeren mehrwertigen Alkohole Ethylenglykol, Propylenglykol, Glycerin, Trimethylolpropan und Pentaerythrit, die dimeren mehrwertigen Alkohole Diethylenglykol und Dipropylenglykol sowie der trimere mehrwertige Alkohol Triethylenglykol.

Beispiele für erfindungsgemäß eingesetzte Monosaccharide, Oligosaccharide und Polysaccharide sind Glukose und Saccharose.

Weiterhin können als Starterverbindungen S^A) Alkoxylierungsprodukte der aufgeführten Monosaccharide, Oligosaccharide, Polysaccharide, mehrwertigen Alkohole oder Mischungen davon eingesetzt werden. Der Begriff "Mischungen davon" bedeutet in diesem Kontext Mischungen aus mindestens zwei verschiedenen Starterverbindungen, die ausgewählt sind aus den genannten Monosacchariden, Oligosacchariden, Polysacchariden und mehrwertigen Alkoholen. Beispiele für derartigen Mischungen sind Mischungen aus zwei verschiedenen mehrwertigen Alkoholen wie Glycerin und Sorbitol und Mischungen aus einem mehrwertigen Alkohol und einem Monosaccharid wie Glycerin und Saccharose und Mischungen aus Glycerin, Ethylenglykol und Saccharose.

Die Monosaccharide, Oligosaccharide, Polysaccharide, mehrwertigen Alkohole oder Mischungen davon werden wie vorstehend beschrieben mit Alkylenoxiden zu den Alkoxylierungsprodukten umgesetzt, üblicherweise werden die Alkoxylierungsprodukte mit $C_2$-$C_4$ Alkylenoxiden hergestellt, bevorzugt mit Ethylenoxid und/oder Propylenoxid. Die Alkoxylierungsprodukte werden dann als Starterverbindung S^A) bei der Herstellung der Polyetherpolyole (A) nochmals mit Alkylenoxiden umgesetzt. Die Verwendung der Alkoxylierungsprodukte als Starterverbindungen S^A) ist insbesondere vorteilhaft, wenn weitere Starterverbindungen S^A) eingesetzt werden, die zunächst als Feststoff vorliegen bzw. eine hohe Viskosität aufweisen, wie weiter unten beschrieben wird.

Bevorzugt werden Sorbit, Mannit, Glycerin, Trimethylolpropan, Pentaerythrit, Saccharose und Mischungen davon als Starterverbindungen S^A) eingesetzt sowie Mischungen aus einer oder mehrerer Verbindungen ausgewählt aus Sorbit, Mannit, Glycerin, Trimethylolpropan, Pentaerythrit und Saccharose und ein oder mehrere weitere mehrwertige Alkohole ausgewählt aus Ethylenglykol, Propylenglykol, Diethylenglykol, Dipropylenglykol und Triethylenglykol. Dipropylenglykol umfasst im Sinne der vorliegenden Erfindung 2,2'-Oxydi-1-propanol, 1,1'-Oxydi-2-propanol und 2-(2-Hydroxypropoxy)-1-propanol.

Die Starterverbindungen für die Polyetherpolyole A) werden vorzugsweise so ausgewählt, dass die Funktionalität der Komponente S^A) 4,6 bis 6,5, mehr bevorzugt von 4,8 bis 6,5, besonders bevorzugt von 5,2 bis 6,5 und ganz besonders bevorzugt von 5,7 bis 6,5 beträgt.

Besonders bevorzugt werden als Starterverbindungen S^A) Gemische aus Saccharose und mindestens einer Verbindung ausgewählt aus Glycerin, Diethylenglykol und Dipropylenglykol eingesetzt. Ganz besonders bevorzugt ist ein Gemisch aus Saccharose und Glycerin.

Vorzugsweise sind die Polyetherpolyole A) ausgewählt aus den Umsetzungsprodukten von

> 10 bis 60 Gew.-% mindestens einer Starterverbindung S^A) und
> 40 bis 90 Gew.-% mindestens eines Alkylenoxids,
> bezogen auf das Gesamtgewicht des Polyetherpolyols A) zuzüglich eines gegebenenfalls eingesetzten Katalysators.

Vorzugsweise beträgt der Anteil der Starterverbindungen S^A) an den erfindungsgemäß eingesetzten Polyetherpolyolen A) 20 bis 45 Gew.-%, mehr bevorzugt 25 bis 42 Gew.-%, besonders bevorzugt 30 bis 40 Gew.-%, ganz besonders bevorzugt 33 bis 38 Gew.-%, bezogen auf das Gewicht des Polyetherpolyols A).

Besonders bevorzugt sind die Polyetherpolyole A) ausgewählt aus den Umsetzungsprodukten von

> ai) 5 bis 55 Gew.-% mindestens einer Starterverbindung S^A) ausgewählt aus Glucose, Mannit, Saccharose, Pentaerythrit, Trimethylolpropan und Sorbit,
> aii) 5 bis 55 Gew.-% mindestens einer von ai) verschiedenen Starterverbindung S^A), vorzugsweise ausgewählt aus Glycerin, Monopropylenglykol, Diethylenglykol, Triethylenglykol, Dipropylenglykol, Alkoxylierungsprodukten der vorgenannten Verbindungen und Alkoxylierungsprodukten von Glucose, Mannit, Saccharose, Pentaerythrit, Trimethylolpropan und/oder Sorbit oder Mischungen daraus,
> aiii) 40 bis 90 Gew.-% mindestens eines Alkylenoxids, vorzugsweise ausgewählt aus Propylenoxid und Ethylenoxid, wobei die Summe aus ai), aii), und/oder aiii) 100 Gew.-% ergibt, zuzüglich eines gegebenenfalls verwendeten Katalysators wie Imidazol.

Der Katalysator wird gegebenenfalls zusätzlich zu den Komponenten ai), aii), aiii) eingesetzt.

Als Katalysatoren für die Umsetzung der Starterverbindung(en) S^A) mit Alkylenoxid(en) werden zumeist basische Verbindungen eingesetzt. Dabei handelt es sich bei den technischen Verfahren meist um die Hydroxide von Alkalimetallen, wie z. B. Natrium-, Cäsium- oder insbesondere Kaliumhydroxid. Auch Alkalialkoholate, wie z. B. Natriummethylat, Natrium- oder Kaliummethylat oder Kaliumisopropylat, sind als Katalysatoren bekannt. Ebenfalls kann die Herstellung unter Amin-Katalyse erfolgen.

Vorzugsweise sind die Amin-Katalysatoren ausgewählt aus der Gruppe enthaltend Trialkylamine wie beispielsweise Trimethylamin, Triethylamin, Tripropylamin und Tributylamin; Dimethylalkylamine wie beispielsweise Dimethylethanolamin, Dimethylcyclohexylamin, Dimethylethylamin und Dimethylbutylamin; aromatische Amine wie beispielsweise Dimethylanilin, Dimethylaminopyridin, Dimethylbenzylamin, Pyridin, Imidazole wie beispielsweise Imidazol, 4(5)-Methylimidazol, 3-Methylimidazol und 1-Hydroxypropylimidazol; Guanidine und Amidine wie beispielsweise 1,5-Diazobicylco[4.3.0]-non-5-en und 1,5-Diazabicylo[5.4.0]undec-7-en. Vorzugsweise ist der Katalysator Dimethylethanolamin. Ganz besonders bevorzugt ist der Katalysator ein Imidazol.

Die Anlagerung der Alkylenoxide wird bevorzugt bei einer Temperatur zwischen 90 und 150 °C und einem Druck zwischen 0,1 bis 8 bar durchgeführt. An die Dosierung der Alkylenoxide schließt sich üblicherweise eine Nachreaktionsphase an, in der das Alkylenoxid abreagiert. Danach kann sich, soweit erforderlich, eine Nachreaktionsphase anschließen. Es folgt üblicherweise Destillation zur Abtrennung leicht flüchtiger Bestandteile, vorzugsweise unter Vakuum.

Insbesondere bei der Verwendung von festen Starterverbindungen, wie z. B. Saccharose, zur Herstellung des erfindungsgemäßen Polyetherpolyols A) sind am Anfang des Prozesses nur langsame Dosierraten möglich, da sich das Alkylenoxid nur schlecht in der Reaktionsmischung löst und zu langsamen Reaktionsgeschwindigkeiten führt. Zudem sorgt die hohe Viskosität, die bei Verwendung von festen Starterverbindungen in der Startermischung entsteht, für eine schlechtere Wärmeabfuhr. Das kann zu lokalen Überhitzungen führen, was einen negativen Einfluss auf die Produktqualität hat. Zudem beschleunigt die hohe Viskosität die Abnutzung der Pumpen und Wärmetauscher. Durch Zugabe wenigstens eines weiteren Polyols zur Startermischung können die negativen Effekte verringert werden. Das ist z. B. in EP 2542612 beschrieben. Bei einigen der beschriebenen Versuche wurden die Mischungen der Starterverbindungen daher mit Polyetherolen versetzt, um die Viskosität der Startmischung zu reduzieren und eine bessere Prozessführung zu ermöglichen.

Vorzugsweise werden bei der Herstellung der Polyetherole A) zur Viskositätserniedrigung Alkoxylierungsprodukte von Monosacchariden, Oligosacchariden, Polysacchariden, mehrwertigen Alkoholen oder Mischungen davon zugegeben. Besonders bevorzugt sind ein Saccharose/Glycerin-gestartetes Propoxylat mit einer Molmasse von 488 g/mol, einer OH-Zahl von 490 mg/mol und einer Funktionalität von 4,3 sowie ein Saccharose/Glycerin-gestartetes Propoxylat mit einem Molgewicht von 639 g/mol und einer Funktionalität von 5,1. Die Verwendung der Alkoxylierungsprodukte als weitere Starterverbindung $S^{A)}$ dient primär dazu, die Prozessführung zu vereinfachen.

Bei der Berechnung der Funktionalität des erfindungsgemäßen Polyetherpolyols A) werden die oben genannten Alkoxylierungsprodukte entsprechend beachtet.

Bevorzugt weisen die Polyetherpolyole A) Funktionalitäten im Bereich von 4,6 bis 6,5, mehr bevorzugt von 4,8 bis 6,5, besonders bevorzugt von 5,2 bis 6,5 und ganz besonders bevorzugt von 5,7 bis 6,5 auf. Die Verwendung von Polyetherpolyolen A) mit höheren Funktionalitäten führt zu einer verbesserten Entformung während der Herstellung der PU-Hartschaumstoffe.

Durch die Verwendung von Polyetherpolyolen A) mit hohen Funktionalitäten kann in Kombination mit Polyetheresterpolyol D) die Entformung bei Polyurethan-Hartschaumstoffen verbessert werden.

In einer weiteren bevorzugten Ausgestaltung weist das Polyetherpolyol A) eine Funktionalität im Bereich von 4,8 bis 6,5 und eine OH-Zahl im Bereich von 300 bis 520 mg KOH/g, insbesondere eine Funktionalität im Bereich von 5,2 bis 6,5 und eine OH-Zahl im Bereich von 390 bis 520 mg KOH/g, auf.

Im Allgemeinen beträgt der Anteil der Polyetherpolyole A) 35 bis 70 Gew.-%, bevorzugt 37 bis 65 Gew.-%, besonders bevorzugt 40 bis 60 Gew.-%, bezogen auf die Gesamtmenge der Komponenten A) bis G1) der Polyolkomponente P).

Polyetherpolyole B)

Die Polyolkomponente P) umfasst eines oder mehrere Polyetherpolyole B) mit einer OH-Zahl im Bereich von 320 bis 500 mg KOH/g, bevorzugt im Bereich von 380 bis 450 mg KOH/g.

Vorzugsweise weist das Polyetherpolyol B) eine Funktionalität im Bereich von 3,0 bis 4,0, mehr bevorzugt eine Funktionalität im Bereich von 3,5 bis 4,0, besonders bevorzugt eine Funktionalität im Bereich von 3,8 bis 4,0 auf.

Die Polyetherpolyole B) sind ausgewählt aus den Umsetzungsprodukten von aromatischen Diaminen mit Alkylenoxiden. Die aromatischen Diamine werden auch als Starterverbindung oder Starterverbindungen $S^{B)}$ bezeichnet.

Beispiele für die als Starterverbindungen $S^{B)}$ eingesetzten aromatischen Diamine sind Toluylendiamine (TDA) und Methylendianiline (MDA). Bevorzugte Starterverbindungen $S^{B)}$ sind Toluylendiamine (TDA). Toluylendiamine umfassen 2,3-, 3,4-, 2,4-, 2,5-, und 2,6-Toluylendiamin. 2,3- und 3,4-Toluylendiamin werden auch als vicinales TDA bezeichnet. Die Toluylendiaminisomere können einzeln oder in Mischungen eingesetzt werden, beispielsweise als Mischungen von 2,4-TDA und 2,6-TDA, als Mischungen von 3,4-TDA und 2,3-TDA, oder als Mischungen von 2,4-TDA , 2,6-TDA, 3,4-TDA und 2,3-TDA. Besonders bevorzugt werden Mischungen aus Toluylendiaminen mit einem Gehalt von mindestens 75 Gew.-%, bevorzugt mindestens 80 Gew.-%, besonders bevorzugt mindestens 85 Gew.-% und insbesondere von mindestens 90 Gew.-% vicinalem Toluylendiamin eingesetzt, jeweils bezogen auf das Gesamtgewicht der Mischungen.

Die als Starterverbindungen $S^{B)}$ für die erfindungsgemäß verwendeten Polyetherpolyole B) eingesetzten aromatischen Diamine werden bevorzugt so ausgewählt, dass deren Funktionalität 3,0 bis 4,0, mehr bevorzugt 3,5 bis 4,0 und besonders bevorzugt 3,8 bis 4,0 beträgt. Gegebenenfalls wird ein Gemisch von geeigneten Startermolekülen eingesetzt.

Vorzugsweise sind die Polyetherpolyole B) ausgewählt aus den Umsetzungsprodukten von 2,3-, 3,4-, 2,4-, 2,5-, 2,6-Toluylendiamin oder Mischungen daraus mit $C_2$-$C_4$ Alkylenoxiden, insbesondere bevorzugt sind Polyetherpolyole B) ausgewählt aus den Umsetzungsprodukten von Mischungen aus Toluylendiaminen enthaltend mindestens 75 Gew.-%, mehr bevorzugt mindestens 80 Gew.-%, besonders bevorzugt mindestens 85 Gew.-% und insbesondere von mindestens 90 Gew.-% vicinales TDA, bezogen auf die Toluylendiaminmischung, mit $C_2$-$C_3$ Alkylenoxiden.

Im Allgemeinen beträgt der Anteil der Polyetherpolyole B) 5 bis 45 Gew.-%, bevorzugt 8 bis 40 Gew.-%, besonders bevorzugt 10 bis 38 Gew.-%, bezogen auf die Gesamtmenge der Komponenten A) bis G1) der Polyolkomponente P).

Polyetherpolyole C)

Die Polyolkomponente P) umfasst ein oder mehrere Polyetherpolyole C) mit einer OH-Zahl im Bereich von 100 bis 240 mg KOH/g, bevorzugt von 120 bis 220 mg KOH/g, besonders bevorzugt von 140 bis 200 mg KOH/g.

Vorzugsweise weist das Polyetherpolyol C) eine Funktionalität im Bereich von 2,8 bis 5,0, bevorzugt eine Funktionalität im Bereich von 3,1 bis 5,0, mehr bevorzugt von 3,5 bis 4,5 und besonders bevorzugt eine Funktionalität von 3,5 bis 4,0 auf.

Gemäß einer Ausführungsform der Erfindung ist die Funktionalität im Bereich von 3,0 bis 5,0, oder 3,1 bis 5,0.

Gemäß einer weiteren Ausführungsform der Erfindung ist die Funktionalität damit im Bereich von 2,8 bis 3,0, oder 2,8 bis unter 3,0.

Polyetherpolyol C) ist ausgewählt aus Umsetzungsprodukten von Aminen, mehrwertigen Alkoholen oder Mischungen daraus mit Alkylenoxiden.

Die als Starterverbindungen $S^{C)}$ für die erfindungsgemäß verwendeten Polyetherpolyole C) eingesetzten Amine, mehrwertigen Alkohole und Mischungen daraus werden im Allgemeinen so ausgewählt, dass deren Funktionalität 2,8 bis 5,0, bevorzugt 3,1 bis 5,0, mehr bevorzugt von 3,5 bis 4,5 und besonders bevorzugt 3,5 bis 4,0 beträgt. Gegebenenfalls wird ein Gemisch von geeigneten Startermolekülen eingesetzt.

Als Starterverbindungen $S^{C)}$ für die Polyetherpolyole C) kommen beispielsweise in Betracht: aliphatische und aromatische Diamine wie Ethylendiamin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 3,4-, 2,4-, 2,5- und 2,6-Toluylendiamin und 4,4'-, 2,4'- und 2,2'-Diaminodiphenylmethan.

Besonders bevorzugt sind die oben genannten primären Diamine, insbesondere Mischungen aus den oben genannten primären Aminen, die vicinales TDA (vic-TDA) enthalten.

Als Starterverbindungen $S^{C)}$ für Polyetherpolyol C) kommen auch mehrwertige Alkohole wie vorstehend für Polyetherpolyol A) beschrieben in Betracht. Vorzugsweise sind die mehrwertigen Alkohole ausgewählt aus der Gruppe bestehend aus Glycerin, Trimethylolpropan, Monopropylenglykol, Diethylenglykol, Triethylenglykol, Dipropylenglykol und Mischungen daraus. Ganz besonders bevorzugt ist Glycerin.

Gemäß einer Ausführungsform enthält das Polyetherpolyol C) ein oder mehrere Umsetzungsprodukte von Aminen ausgewählt aus Ethylendiamin, 1,3-Propylendiamin, 1,3-, 1,4-Butylendiamin, 1,2-, 1,3-, 1,4-, 1,5-, 1,6-Hexamethylendiamin, Phenylendiamine, 2,3-, 3,4-, 2,4-, 2,5-, 2,6-Toluylendiamin und 4,4'-, 2,4'-, 2,2'-Diaminodiphenylmethan und Mischungen daraus mit Alkylenoxiden, vorzugsweise ist das Polyetherpolyol C) aus den vorgenannten Umsetzungsprodukten ausgewählt.

Gemäß einer weiteren Ausführungsform enthält das Polyetherpolyl C) ein oder mehrere Umsetzungsprodukte von mehrwertigen Alkoholen ausgewählt aus Glycerin, Trimethylolpropan, Monopropylenglykol, Diethylenglykol, Triethylenglykol und Mischungen daraus mit Alkylenoxiden, vorzugsweise ist das Polyetherpolyol C) aus den vorgenannten Umsetzungsprodukten ausgewählt.

Die für die Herstellung der Polyetherole C) eingesetzten Alkylenoxide entsprechen den weiter oben beschriebenen Alkylenoxiden. Vorzugsweise enthalten die Polyetherpolyole C) Ethylenoxid- und Propylenoxideinheiten, mehr bevorzugt sind die Polyetherole C) ausgewählt aus Umsetzungsprodukten von Aminen, mehrwertigen Alkoholen oder Mischungen daraus mit Ethylenoxid und Propylenoxid, insbesondere bevorzugt sind die Polyetherole C) ausgewählt aus den Umsetzungsprodukten von Ethylendiamin, 1,3-Propylendiamin, 1,3-, 1,4-Butylendiamin, 1,2-, 1,3-, 1,4-, 1,5-, 1,6-Hexamethylendiamin, Phenylendiamine, 2,3-, 3,4-, 2,4-, 2,5-, 2,6-Toluylendiamin und 4,4'-, 2,4'-, 2,2'-Diaminodiphenylmethan, Glycerin, Trimethylolpropan, Monopropylenglykol, Diethylenglykol, Triethylenglykol, Dipropylenglykol oder Mischungen daraus mit Ethylenoxid und Propylenoxid.

Erfindungsgemäß verwendete Polyetherpolyole B) und C) können nach bekannten Verfahren hergestellt werden, beispielsweise durch anionische Polymerisation mit Alkalihydroxiden, wie z. B. Natrium- oder Kaliumhydroxid, oder Alkalialkoholaten, wie z. B. Natriummethylat, Natrium- oder Kaliummethylat oder Kaliumisopropylat, als Katalysatoren oder durch kationische Polymerisation mit Lewis-Säuren, wie Antimonpentachlorid, Borfluorid-Etherat u. a. oder Bleicherde, als Katalysatoren aus einem oder mehreren Alkylenoxiden mit 2 bis 4 Kohlenstoffatomen im Alkylenrest. Ebenfalls kann die Herstellung unter Imidazol-Katalyse erfolgen oder unter Verwendung von Trimethylamin oder N,N-Dimethylcyclohexylamin.

Im Allgemeinen beträgt der Anteil der Polyetherpolyole C) in der Polyolkomponente P) > 0 bis 30 Gew.-%, bevorzugt 1 bis 25 Gew.-%, besonders bevorzugt 2 bis 20 Gew.-%, bezogen auf die Gesamtmenge der Komponenten A) bis G1) der Polyolkomponente P).

Polyetheresterpolyole D):
Die Polyolkomponente P) umfasst ein oder mehrere Polyetheresterpolyole D) mit einer OH-Zahl von 380 bis 480 mg KOH/g, bevorzugt von 390 bis 440 mg KOH/g, insbesondere bevorzugt 410 bis 430 mg KOH/g.

Weiterhin beträgt der Gehalt an Fettsäure in den Polyetheresterpolyolen D) 5 bis 25 Gew.-%, bevorzugt 10 bis 20 Gew.-%, besonders bevorzugt 10 bis 15 Gew.-%, bezogen auf das Gesamtgewicht der Polyetheresterpolyole D).

Vorzugsweise weist das Polyetheresterpolyol D) eine Funktionalität im Bereich von 3,0 bis 5,0, bevorzugt eine Funktionalität im Bereich von 3,2 bis 5,0, mehr bevorzugt von 3,4 bis 4,8, noch mehr bevorzugt 4,0 bis 4,7 und insbesondere bevorzugt von 4,2 bis 4,6 auf.

Geeignete Polyetheresterpolyole D) sind ausgewählt aus Umsetzungsprodukten eines oder mehrerer hydroxylgruppenhaltigen Starterverbindungen, einer oder mehrerer Fettsäuren, Fettsäuremonoester oder Gemische daraus und eines oder mehrerer $C_2$-$C_4$ Alkylenoxiden. Die hydroxylgruppenhaltigen Starterverbindungen sind bevorzugt ausgewählt aus Monosacchariden, Oligosacchariden, Polysacchariden, mehrwertigen Alkoholen oder Mischungen daraus.

Bevorzugte hydroxylgruppenhaltige Starterverbindungen sind ausgewählt aus der Gruppe bestehend aus: Zuckern und Zuckeralkoholen wie Glucose, Mannit, Saccharose und Sorbit, mehrwertigen Phenolen, Resolen, wie z.B. oligomeren Kondensationsprodukten aus Phenol und Formaldehyd, mehrwertigen Alkoholen wie Trimethylolpropan, Pentaerythrit, Glycerin und Glykolen wie Ethylenglykol, Propylenglykol und deren Kondensationsprodukte wie Polyethylenglykole und Polypropylenglykole, z.B. Diethylenglykol, Triethylenglykol, Dipropylenglykol, und Wasser.

Besonders bevorzugt als Starterverbindungen sind Zucker und Zuckeralkohole wie Saccharose und Sorbit, Glycerin, sowie Gemische der vorgenannten Zucker und/oder Zuckeralkohole mit Glycerin, Wasser und/oder Glykolen wie z.B. Diethylenglykol und/oder Dipropylenglykol. Ganz besonders bevorzugt sind Gemische aus Saccharose und mindestens einer - vorzugsweise einer - Verbindung ausgewählt aus: Glycerin, Diethylenglykol und Dipropylenglykol. Ganz besonders bevorzugt ist ein Gemisch aus Saccharose und Glycerin.

Im Allgemeinen ist die Fettsäure oder der Fettsäuremonoester ausgewählt aus der Gruppe bestehend aus Polyhydroxyfettsäuren, Ricinolsäure, Hydroxyl-modifizierten Ölen, Hydroxyl-modifizierten Fettsäuren und Fettsäureestern basierend auf Myristoleinsäure, Palmitoleinsäure, Ölsäure, Stearinsäure, Palmitinsäure, Vaccensäure, Petroselinsäure, Gadoleinsäure, Erukasäure, Nervonsäure, Linolsäure, $\alpha$- und $\gamma$-Linolensäure, Stearidonsäure, Arachidonsäure, Timnodonsäure, Clupanodonsäure und Cervonsäure. Bevorzugte Fettsäuremonoester sind die Fettsäuremethylester. Bevorzugte Fettsäuren sind Stearinsäure, Palmitinsäure, Linolensäure und insbesondere Ölsäure, deren Monoester, vorzugsweise deren Methylester, sowie Gemische daraus. Die Fettsäuren können als reine Fettsäuren oder Fettsäureester eingesetzt werden. Bevorzugt werden sie als Fettsäureester eingesetzt. Ganz besonders bevorzugt werden Fettsäuremethylester wie z.B. Biodiesel oder Ölsäuremethylester eingesetzt.

Unter Biodiesel sind Fettsäuremethylester angelehnt an die Norm EN 14214 aus dem Jahr 2010 zu verstehen. Hauptbestandteile des im Allgemeinen aus Rapsöl, Sojaöl oder Palmöl gewonnen Biodiesels sind Methylester von gesättigten $C_{16}$ bis $C_{18}$-Fettsäuren und Methylester von einfach oder mehrfach ungesättigten $C_{18}$-Fettsäuren wie Ölsäure, Linolsäure und Linolensäure.

Geeignete Alkylenoxide mit 2 bis 4 C-Atomen sind beispielsweise Ethylenoxid, Tetrahydrofuran, Propylenoxid, 1,2- bzw. 2,3-Butylenoxid. Die Alkylenoxide können einzeln, alternierend nacheinander oder als Mischungen verwendet werden. Bevorzugte Alkylenoxide sind Propylenoxid und Ethylenoxid, besonders bevorzugt sind Gemische aus Ethylenoxid und Propylenoxid mit > 50 Gew.-% Propylenoxid, ganz besonders bevorzugt ist reines Propylenoxid.

In einer bevorzugten Ausführungsform wird als Alkoxylierungskatalysator ein Amin verwendet, bevorzugt Dimethylethanolamin oder Imidazol, besonders bevorzugt ist Imidazol.

Geeignete Polyetheresterpolyole D) sind ausgewählt aus Umsetzungsprodukten von

di) 20 bis 35 Gew.-% eines oder mehrerer hydroxylgruppenhaltigen Starterverbindungen;

dii) 5 bis 25 Gew.-%, bevorzugt 10 bis 20 Gew.-%, besonders bevorzugt 10 bis 15 Gew.-% einer oder mehrerer Fettsäuren, Fettsäuremonoester oder Gemische daraus,

diii) 50 bis 65 Gew.-%, eines oder mehrerer Alkylenoxide mit 2 bis 4 C-Atomen, bezogen auf das Gesamtgewicht der Polyetheresterpolyole D).

Der Anteil Starterverbindungen di) an den erfindungsgemäß eingesetzten Polyetheresterpolyolen D) beträgt im Allgemeinen 20 bis 35 Gew.-%, bevorzugt 22 bis 32 Gew.-%, besonders bevorzugt 24 bis 30 Gew.-%, ganz besonders bevorzugt 24 bis 29 Gew.-%, bezogen auf das Gesamtgewicht der Polyetheresterpolyole D).

Der Anteil Fettsäure oder der Fettsäuremonoester dii) an den erfindungsgemäß eingesetzten Polyetheresterpolyolen D) beträgt im Allgemeinen bevorzugt 10 bis 20 Gew.-%, besonders bevorzugt 10 bis 15 Gew.-%, bezogen auf das Gewicht der Polyetheresterpolyole D).

Der Anteil an Alkylenoxiden diii) an den erfindungsgemäß eingesetzten Polyetheresterpolyolen D) beträgt im Allgemeinen 50 bis 65 Gew.-%, bevorzugt 52 bis 62 Gew.-%, besonders bevorzugt 55 bis 61 Gew.-%, ganz besonders bevorzugt 57 bis 60 Gew.-%, bezogen auf das Gewicht der Polyetheresterpolyole D).

Im Allgemeinen beträgt der Anteil der Polyetheresterpolyole D) 5 bis 40 Gew.-%, bevorzugt 7 bis 35 Gew.-%, mehr bevorzugt 9 bis 35 Gew.-%, besonders bevorzugt 11 bis 32 Gew.-%, bezogen auf die Summe der Komponenten A) bis G1) der Polyolkomponente P).

Katalysatoren E)

Die erfindungsgemäße Polyolkomponente P) kann wenigstens einen Katalysator E) enthalten.

Als Katalysatoren E) werden insbesondere Verbindungen verwendet, die die Reaktion der in der Polyolkomponente P) enthaltenen Polyetherpolyole A), B) und C) sowie Polyetheresterpolyole D) mit den organischen, gegebenenfalls modifizierten Di- und/oder Polyisocyanaten PI gemäß dem nachstehenden erfindungsgemäßen Verfahren stark beschleunigen.

Zweckmäßigerweise können als Katalysatoren E) basische Polyurethankatalysatoren verwendet werden, beispielsweise tertiäre Amine, wie Triethylamin, Tributylamin, Dimethylbenzylamin, Dicyclohexylmethylamin, Dimethylcyclohexylamin, Bis(2-dimethylaminoethyl)ether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2.2.0)-octan, 1,4-Diazabicyclo(2.2.2)-octan (Dabco), 1,8-Diaza-bicyclo(5.4.0)-undecen-7, und Alkanolaminverbindungen, wie Triethanolamin, Triisopropanolamin, N-Methyl- und N-Ethyldiethanolamin, Dimethylaminoethanol, 2-(N,N-Dime-thylaminoethoxy)ethanol, N,N',N"-Tris-(dialkylaminoalkyl)hexahydrotriazine, z. B. N,N',N"-Tris-(dimethylaminopropyl)-s-hexahydrotriazin, und Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat.

Als Katalysatoren E) kommen ferner in Betracht: Amidine, wie 2,3-Dimethyl-3,4,5,6-tetrahydro-pyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von Säuren, insbesondere langkettige Fettsäuren mit 10 bis 20 C-Atomen und gegebenenfalls seitenständigen OH-Gruppen.

Bevorzugt wird eine Mischung aus mehreren der vorgenannten Katalysatoren E) eingesetzt. Besonders bevorzugt eingesetzt wird eine Katalysatormischung E) bestehend aus: Dimethylcyclohexylamin E1), Pentamethyldiethylentriamin oder Bis(2-dimethylaminoethyl)ether E2), Tris(dimethylaminopropyl)hexahydro-1,3,5-triazin E3) und Dimethylbenzylamin E4).

Bevorzugt beträgt in der vorgenannten Katalysatormischung aus den Katalysatoren E1) bis E4) der Anteil des Katalysators E1) 20 bis 60 Gew.-%, der Anteil des Katalysators E2) 10 bis 50 Gew.-%, der Anteil des Katalysators E3) 10 bis 40 Gew.-% und der Anteil des Katalysators E4) 20 bis 50 Gew.-%, wobei die Summe der Katalysatoren E1) bis E4) 100 Gew.-% ergibt.

Vorzugsweise verwendet werden 1,0 bis 5,5 Gew.-%, insbesondere 1,0 bis 5,0 Gew.-% eines oder mehrerer Katalysatoren E), bezogen auf das Gewicht der Polyolkomponente P).

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze alleine oder in Kombination mit tertiären Aminen. Die Isocyanurat-Bildung führt zu flammwidrigen PIR-Schaumstoffen, welche bevorzugt im technischen Hartschaum, beispielsweise im Bauwesen als Dämmplatte oder Sandwichelemente, eingesetzt werden.

Weitere Angaben zu den genannten Katalysatoren können der Fachliteratur, beispielsweise dem Kunststoffhandbuch, Band VII, Polyurethane, Carl Hanser Verlag München, Wien, 1., 2. und 3. Auflage 1966, 1983 und 1993, entnommen werden.

Komponente F)

Die erfindungsgemäße Polyolkomponente P) kann eine oder mehrere weiterer Komponenten F) ausgewählt aus Hilfsmitteln und Zusatzstoffen enthalten.

Hilfsmittel und Zusatzstoffe F) der Polyolkomponente P) sind beispielsweise oberflächenaktive Substanzen wie Emulgatoren, Schaumstabilisatoren und Zellregler.

Als oberflächenaktive Substanzen kommen z. B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z. B. ölsaures Diethylamin, stearinsaures Diethanolamin, ricinolsaures Diethanolamin, Salze von Sulfonsäuren, z. B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Besonders bevorzugt werden Silikonstabilisatoren.

Als Zusatzmittel ist Dipropylenglykol (DPG) besonders bevorzugt.

Bevorzugt enthält die Polyolkomponente P) als weitere Komponente F) einen oder mehrere Schaumstabilisatoren, insbesondere silikonhaltige Schaumstabilisatoren wie Siloxanoxalkylen-Mischpolymerisate und andere Organopolysiloxane.

Die vorgenannten Schaumstabilisatoren werden vorzugsweise in Mengen von 0,5 bis 4,5 Gew.-%, besonders bevorzugt 1 bis 3,5 Gew.-% eingesetzt, bezogen auf das Gewicht der Polyolkomponente P) eingesetzt werden.

Nähere Angaben über die vorgenannten und weitere geeignete Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Die Polyolkomponente P) kann weiterhin ein oder mehrere Treibmittel ausgewählt aus chemischen Treibmitteln G1) und physikalischen Treibmitteln G2) enthalten. Bevorzugt enthält die Polyolkomponente P) mindestens ein Treibmittel ausgewählt aus chemischen Treibmitteln G1) und physikalischen Treibmitteln G2), besonders bevorzugt enthält die Polyolkomponente P) mindestens ein chemisches Treibmittel G1) und mindestens ein physikalisches Treibmittel G2).

Vorzugsweise enthält die erfindungsgemäße Polyolkomponente P) 1 bis 20,0 Gew.-%, besonders bevorzugt 1,2 bis 5,0 Gew.-%, ganz besonders bevorzugt 1,5 bis 3,0 Gew.-% eines chemischen Treibmittels G1), bezogen auf die Gesamtmenge der Komponenten A) bis G1). Vorzugsweise enthält die erfindungsgemäße Polyolkomponente P) 1 bis 40,0 Gew.-%, besonders bevorzugt 3 bis 30,0 Gew.-%, ganz besonders bevorzugt 9,0 bis 17,0 Gew.-% eines physikalischen Treibmittels G2), bezogen auf die Gesamtmenge der Komponenten A) bis G1). Bevorzugt werden Kohlenwasserstoffe und besonders bevorzugt acyclische Pentanisomere und/oder Cyclopentan, bzw. Mischungen daraus.

Gemäß einer Ausführungsform umfasst die erfindungsgemäße Polyolkomponente P) mindestens ein chemisches Treibmittel G1) und mindestens ein physikalisches Treibmittel G2) in den oben genannten Konzentrationsbereichen.

Als geeignete physikalische Treibmittel G2) können im Allgemeinen alle dem Fachmann als Treibmittel bekannten Kohlenwasserstoffe, beispielsweis nichthalogenierte und halogenierten, bevorzugt fluorierten, Alkene eingesetzt werden.

Gemäß einer Ausführungsform werden $C_2$ bis $C_6$ Fluoralkene, besonders bevorzugt $C_3$ bis $C_5$ Fluoralkene eingesetzt.

Besonders bevorzugte Beispiele für erfindungsgemäß geeignete fluorierte Alkene sind Propene, Butene, Pentene und Hexene mit 3 bis 6 Fluor-Substituenten, wobei andere Substituenten wie Chlor vorhanden sein können, beispielsweise Tetrafluorpropene, Fluorchlorpropene, beispielsweise Trifluormonochlorpropene, Pentafluorpropene, Fluorchlorbutene, Hexafluorbutene oder Mischungen davon.

Erfindungsgemäß besonders bevorzugte fluorierte Alkene sind ausgewählt aus der Gruppe bestehend aus cis-odertrans-1,1,1,3-Tetrafluorpropen, 1,1,1-Trifluor-2-chlorpropen, 1-Chlor-3,3,3-trifluorpropen, 1,1,1,2,3-Pentafluorpropen, in cis-oder trans-Form, 1,1,1,4,4,4-Hexafluorbuten, 1-Brompentafluorpropen, 2-Brompentafluorpropen, 3-Brompentafluorpropen, 1,1,2,3,3,4,4-Heptafluor-1-buten, 3,3,4,4,5,5,5-Heptafluor-1-penten, 1-Brom-2,3,3,3-tetrafluor-propen, 2-Brom-1,3,3,3-tetrafluorpropen, 3-Brom-1,1,3,3-tetrafluorpropen, 2-Brom-3,3,3-trifluor-propen, E-1-Brom-3,3,3-trifluorpropen, 3,3,3-Trifluor-2-(trifluormethyl)propen, 1-Chlor-3,3,3-tri-fluorpropen, 2-Chlor-3,3,3-trifluorpropen,1,1,1-Trifluor-2-buten und Mischungen davon.

Gemäß einer weiteren Ausführungsform werden keine halogenierten Kohlenwasserstoffe als physikalische Treibmittel G2) verwendet.

Als physikalische Treibmittel G2) bevorzugt verwendet werden acyclische Pentanisomere und/oder Cyclopentan, insbesondere Cyclopentan. Vorzugsweise werden acyclische Pentanisomere und/oder Cyclopentan im Bereich von 9 bis 17 Gew.-%, bezogen auf die Gesamtmenge der Komponenten A) bis G1), eingesetzt. Cyclopentan und Mischungen aus Isopentan mit Cyclopentan mit einem Gehalt von mindestens 70 Gew.% Cyclopentan sind bevorzugt, besonders bevorzugt wird Cyclopentan mit einer Reinheit von mindestens 90 Gew.-%, insbesondere von mindestens 95 Gew.-% eingesetzt.

Als chemisches Treibmittel G1) wird bevorzugt Wasser verwendet. Das Wasser wird insbesondere bevorzugt in einer Konzentration von 1,5 bis 3 Gew.-%, bezogen auf die Gesamtmenge der Komponenten A) bis G1), eingesetzt.

Vorzugsweise besteht die Polyolkomponente P) aus:

a) 35 bis 70 Gew.-% eines oder mehrerer Polyetherpolyole A) mit einer OH-Zahl im Bereich von 300 bis 520 mg KOH/g ausgewählt aus Umsetzungsprodukten von Monosacchariden, Oligosacchariden, Polysacchariden, mehrwertigen Alkoholen oder Mischungen daraus mit Alkylenoxiden;

b) 5 bis 45 Gew.-% eines oder mehrerer Polyetherpolyole B) mit einer OH-Zahl im Bereich von 320 bis 500 mg KOH/g ausgewählt ist aus den Umsetzungsprodukten von aromatischen Diaminen mit Alkylenoxiden;

c) > 0 bis 30 Gew.-% eines oder mehrerer Polyetherpolyole C) mit einer OH-Zahl im Bereich von 100 bis 240 mg KOH/g ausgewählt aus Umsetzungsprodukten von Aminen, mehrwertigen Alkoholen oder Mischungen daraus mit Alkylenoxiden;

d) 5 bis 40 Gew.-% eines oder mehrerer Polyetheresterpolyole D) mit einer OH-Zahl von 380 bis 480 mg KOH/g und einem Gehalt an Fettsäuren von 5 bis 25 Gew.-%, bezogen auf die Polyetheresterpolyole D);

e) gegebenenfalls einen oder mehrere Katalysatoren E);

f) gegebenenfalls eine oder mehrere weiterer Komponenten F) ausgewählt aus Hilfsmitteln und Zusatzstoffen;

g) gegebenenfalls ein oder mehrere Treibmittel ausgewählt aus chemischen Treibmitteln G1) und physikalischen Treibmitteln G2);

wobei sich die Konzentrationsangaben in Gew.-% für A) bis D) auf die Gesamtmenge der Komponenten A) bis G1) der Polyolkomponente P) beziehen.

Besonders bevorzugt sind Polyolkomponenten P) wie vorstehend beschrieben, in denen das Polyetherpolyol A) eine Funktionalität von 5,7 bis 6,5 aufweist und das Polyetherpolyol B) in einer Menge von 18 bis 40 Gew.-% enthalten ist. Aus diesen Polyolkomponenten P) lassen sich Polyurethan-Hartschaumstoffe mit einer besonders guten Entformbarkeit bei gleichzeitig guter Haftung und Wärmedämmung herstellen.

Die Erfindung betrifft ebenfalls ein Verfahren zur Herstellung von Polyurethan-Hartschaumstoffen durch Umsetzung von

I) organischen oder modifizierten organischen Di- oder Polyisocyanaten PI) oder Gemischen daraus mit

II) einer erfindungsgemäßen Polyolkomponente P).

Die für die Umsetzung mit den organischen Di- oder Polyisocyanaten PI) eingesetzte Polyolkomponente P) enthält bevorzugt mindestens ein Treibmittel ausgewählt aus chemischen Treibmitteln G1) und physikalischen Treibmittel G2). Ebenfalls bevorzugt enthält die für die Umsetzung mit den Di- oder Polyisocyanaten PI) eingesetzte Polyolkomponente P) einen oder mehrere Katalysatoren E), ganz besonders bevorzugt umfasst die Polyolkomponente P) mindestens ein Treibmittel ausgewählt aus chemischen Treibmitteln G1) und physikalischen Treibmittel G2) und mindestens einen Katalysator E).

Di- oder Polyisocyanate PI)

Als organische Di- oder Polyisocyanate PI) kommen die an sich bekannten aliphatischen, cycloaliphatischen, araliphatischen und vorzugsweise die aromatischen mehrwertigen Isocyanate in Frage. Die organischen Di- oder Polyisocyanate können gegebenenfalls modifiziert sein.

Im Einzelnen seien beispielhaft genannt: Alkylendiisocyanate mit 4 bis 12 Kohlenstoffatomen im Alkylenrest, wie 1,12-Dodecandiioscyanat, 2-Ethyltetramethylendiisocyanat-1,4, 2-Methylpentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie z. B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 2,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- oder Polyisocyanate können einzeln oder in Form ihrer Mischungen eingesetzt werden.

Bevorzugte Polyisocyanate sind Toluylendiisocyanat (TDI), Diphenylmethandiisocyanat (MDI) und insbesondere Gemische aus Diphenylmethandiisocyanat und Polyphenylenpolymethylenpolyisocyanaten (Polymer-MDI oder PMDI).

Häufig werden auch modifizierte mehrwertige Isocyanate, d. h. Produkte, die durch chemische Umsetzung organischer Polyisocyanate erhalten werden, verwendet. Beispielhaft genannt seien Ester-, Harnstoff-, Biuret-, Allophanat-, Carbodiimid-, Isocyanurat-, Uretdion-, Carbamat-, und/oder Urethangruppen enthaltende Polyisocyanate.

Zur Herstellung der erfindungsgemäßen Polyurethan-Hartschaumstoffe wird ganz besonders bevorzugt Polymer-MDI eingesetzt, z. B. Lupranat® M20 von BASF SE.

Zur Herstellung der erfindungsgemäßen Polyurethan-Hartschaumstoffe werden die gegebenenfalls modifizierten organischen Di- und/oder Polyisocyanate PI) und die erfindungsgemäße Polyolkomponente P) enthaltend ein Treibmittel in solchen Mengen zur Umsetzung gebracht, dass der Isocyanatindex 70 bis 300, bevorzugt 90 bis 200, besonders bevorzugt 100 bis 150, beträgt.

Die Polyurethan-Hartschaumstoffe werden vorteilhafterweise nach dem one shot-Verfahren, beispielsweise mit Hilfe der Hochdruck- oder Niederdruck-Technik in offenen oder geschlossenen Formwerkzeugen, beispielsweise metallischen Formwerkzeugen, hergestellt. Üblich ist auch das kontinuierliche Auftragen des Reaktionsgemisches auf geeigneten Bandstraßen zur Erzeugung von Paneelen.

Die Ausgangskomponenten werden bei einer Temperatur von 10 bis 30 °C, vorzugsweise von 15 bis 30 °C und insbesondere von 15 bis 25 °C, gemischt und in das offene oder, gegebenenfalls unter erhöhtem Druck, in das geschlossene Formwerkzeug eingebracht. Die Vermischung erfolgt üblicherweise im Hochdruckmischkopf. Die Formwerkzeugtemperatur beträgt zweckmäßigerweise 30 bis 70 °C, vorzugsweise 40 bis 60 °C.

Die Erfindung betrifft ebenfalls Polyurethan-Hartschaumstoff erhältlich durch das erfindungsgemäße Verfahren.

Die Erfindung betrifft ebenfalls die Verwendung der erfindungsgemäßen Polyolkomponente P) zur Herstellung von Polyurethan-Hartschaumstoffen.

Die Erfindung betrifft ebenfalls die Verwendung des durch das erfindungsgemäße Verfahren hergestellten Polyurethan-Hartschaumstoffes für Dämm- und Kühlanwendungen, insbesondere in Kühlschränken, kommerziellen Kältegeräten, Gefriertruhen, Warmwasserspeichern und Boilern.

Vorzugsweise sind alle vorstehend aufgeführten Ausführungsformen und bevorzugten Ausführungsformen frei miteinander kombinierbar, sofern der Kontext nicht eindeutig dagegen spricht.

Vorzugsweise umfassen die Ausdrücke "umfassend" und "umfasst" auch die Ausdrücke "bestehend", "bestehend aus" oder "besteht aus".

Die Erfindung wird durch die nachstehenden Beispiele näher erläutert, ohne die Erfindung einzuschränken.

Beispiele

I. Messmethoden:

Messung der Hydroxylzahl:
Die Hydroxylzahlen werden nach der DIN 53240 (1971-12) bestimmt.

Viskositätsbestimmung:
Die Viskosität der Polyole wird, wenn nicht anders angegeben, bei 25 °C gemäß DIN EN ISO 3219 (1994) mit einem Haake Viscotester 550 mit Platte/Kegel-Messgeometrie (PK100) unter Verwendung des Kegels PK 1 1° (Durchmesser: 28 mm; Kegelwinkel: 1°) bei einer Scherrate von 40 1/s bestimmt.

Bestimmung der Pentanlöslichkeit:
Eine gute Pentanlöslichkeit der Polylkomponente über einen großen Temperaturbereich bis zu einer möglichst niedrigen Temperatur (Pentanlöslichkeit bis zu 5°C) ist in der verarbeitenden Industrie von großer Bedeutung: Dadurch kann eine gute Lagerstabilität der Polyolkomponente bei unterschiedlichen klimatischen Bedingungen gewährleistet werden. Zur Beurteilung der Pentanlöslichkeit (als Stabilität der Polyolkomponente PK mit Treibmittel) wird die Polyolkomponente P) mit der in den Beispielen angegebenen Menge an physikalischem Treibmittel G2) vermischt (Vollrath-Rührer, 1500 Umdrehungen/Min., 2 Min. Rührzeit) in ein Schraubglas gegeben und verschlossen. Nach vollständigem Entweichen von Gasbläschen wird die Klarheit der Probe zunächst bei Raumtemperatur geprüft. Ist die Probe klar, wird sie anschließend im Wasserbad in Schritten von 1 °C abgekühlt und 30 Min. nach Erreichen der eingestellten Temperatur auf Klarheit geprüft. Die in Tabellen 1 und 2 angegebene Temperatur entspricht der Temperatur, oberhalb derer die Mischung noch klar war.

Bestimmung des Entformungsverhaltens:
Ein gutes Entformungsverhalten ist bei der verarbeitenden Industrie von höchstem Interesse, da somit die Verarbeitungszeiten bezogen auf den eingesetzten Schaum sinken. Die Produktivität steigt somit und die Kosten können daher auf diese Weise reduziert werden. Gutes Entformungsverhalten wird durch die Nachexpansion des ausgehärteten PU-Hartschaums determiniert. Eine möglichst geringe Nachexpansion innerhalb einer möglichst kurzen Aushärtzeit der eingesetzten Komponenten innerhalb der Form ist wünschenswert, da so eine schnellere Entformung möglich wird. Die Bestimmung des Entformungsverhaltens erfolgt durch Messung des Nachtriebes von Schaumkörpern, die mit einer Kastenform der Dimension 700 x 400 x 90 mm bei einer Werkzeugtemperatur von 45±2 °C in Abhängigkeit der Entformzeit und der Überfüllung (OP = Overpacking, entspricht dem Verhältnis der Gesamtrohdichte/Mindestfülldichte und beschreibt die prozentual mehr eingebrachte Menge an Ausgangsstoffen, die eigentlich nötig wäre um die Form gerade mit einem PU-Hartschaum zu füllen. Die hierin beschriebenen experimentellen Beispiele wurden mit einem OP von 17.5% durchgeführt.) hergestellt werden. Der Nachtrieb wird durch Höhenmessung der Schaumquader nach 24 h ermittelt.

Startzeit:

Zeit vom Beginn des Vermischens des Reaktionsgemisches bis zum Start der Schaumexpansion.

Abbindezeit (Gelzeit/Fadenziehzeit)

Zeit vom Beginn des Vermischens des Reaktionsgemisches bis zum Zeitpunkt bis im Kontakt mit dem Schaum Fäden gezogen werden können (zum Beispiel mit einem Holzstab). Dieser Punkt stellt somit den Übergang von flüssig zu festem Zustand dar.

Mindestfülldichte für ein Bauteil / Frei geschäumte Dichte:

Für die Bestimmung der Mindestfülldichte wird so viel Polyurethanreaktionsgemisch in eine Form der Maße 2000 x 200 x 50 mm bei einer Werkzeugtemperatur von 45±2 °C eingebracht, dass der Schaum die Form gerade ausfüllt ohne das Ende der Form zu berühren. Die Länge des Fließweges wird gemessen und die Mindestfülldichte berechnet nach MFD=(m*L/(V*s)), wobei m=Masse, L=Länge der Form, s=Fließweg, und V=Volumen der Form. Die freigeschäumte Dichte wird durch Aufschäumen des Polyurethanreaktionsgemisches in einen Plastiksack bei Raumtemperatur bestimmt. Die Dichte wird an einem Würfel, der aus der Mitte des ausgeschäumten Plastiksacks entnommen worden ist, bestimmt.

Bestimmung der Fließfähigkeit:

Die Fließfähigkeit wird als Fließfaktor = (Mindestfülldichte/Frei geschäumte Dichte) angegeben.

Haftung:

Dem Probekörper wird ein Prüfkörper entnommen. Dieser entspricht dem vom Anguss her gesehenen ersten 50 cm des Lanzenformteils mit einer Überfüllung von 14,5%. Mittels Schablone schneidet man die Alufolie auf der Oberseite 56 mm breit und 200 mm lang ein und hebt eine Lasche von ca. 50 mm vom Schaum ab. Diese wird in den Probenaufnehmer der Universal-Prüfmaschine gespannt. Beim Erreichen der Prüfzeit wird die Messung gestartet. Die gemessene Kraft um die Alufolie vom Schaum abzuschälen wird in Newton ausgegeben. Haftwerte, die mit anderen Schaumformulierungen verglichen werden sollen, müssen unter gleichen Schäum- und Prüfbedingungen gemessen werden. Um die Grenze der Haftung der Deckfolie am Schaum zu testen, wird die Formtemperatur schrittweise um 5°C gesenkt, Probekörper geschäumt und die Haftung an diesen gemessen. Die Haftgrenze ist erreicht, wenn die Deckschicht sich schon beim Entformen des Probekörpers vom Schaum ablöst.

Wärmeleitfähigkeit:

Die Wärmeleitfähigkeit wird mit einem Taurus TCA300 DTX Gerät bei einer Mitteltemperatur von 10 °C bestimmt. Zur Herstellung der Prüfkörper wird das Polyurethan-Reaktionsgemisch in eine Form der Maße 2000 x 200 x 50 mm eingebracht (15 % Überfüllung) und nach 5 Min. entformt. Nach Lagerung für 24 Stunden bei Normklima werden mehrere Schaumquader (Position 10, 900 und 1700 mm bezogen auf Lanzenanfang) der Dimension 200 x 200 x 50 mm aus der Mitte geschnitten. Anschließend wird die Ober- und Unterseite entfernt, so dass Prüfkörper der Dimension 200 x 200 x 30 mm erhalten werden.

Druckfestigkeit:

Die Druckfestigkeit wird bestimmt nach DIN ISO 844 EN DE (2014-11).

II. Herstellung der Polyole:

Polyetherpolyole A) und A1):

Ein Druckreaktor mit Rührwerk, Mantelheizung und Kühlung, Dosiereinrichtungen für feste und flüssige Substanzen und Alkylenoxide sowie Einrichtungen zur Stickstoffinertisierung und einem Vakuumsystem wurden mit Glycerin, Saccharose, festem Imidazol und für Polyol A mit einem Polyetherpolyol auf Basis von Saccharose, Glycerin und Propylenoxid (Propoxylierungsprodukt einer Mischung aus Glycerin und Saccharose; Molekulargewicht 488 g/mol, Funktionalität 4,3, ist ein) befüllt. Anschließend wurde mehrmals inertisiert (unter Rühren) und die Temperatur wurde auf 120 °C erhöht. Das Gemisch wurde bei 120 °C mit Propylenoxid umgesetzt. Die Nachreaktion von 2 Stunden lief bei 120 °C ab. Anschließend wurde die Probe im Stickstoffstrom abgestrippt.

Beispiel für die Berechnung der Funktionalität anhand des Polyetherpolyols A)

Es wurden 12,3 kg Glycerin, 90,70 kg Saccharose, 0,34 kg festem Imidazol und 29,00 kg des Polyetherpolyols auf Basis von Saccharose, Glycerin und Propylenoxid (Molekulargewicht 488 g/mol, Funktionalität 4,3,) mit 256,3 kg Propylenoxid umgesetzt und 372 kg Produkt mit folgenden Parametern erhalten:

| | |
|---|---|
| OH-Zahl: | 429 mg KOH/g |
| Viskosität (25 °C): | 34600 mPas |

Berechnung Starterfunktionalität:

| | |
|---|---|
| Glycerin (Funktionalität 3): | 12300 g / 92,09 g/mol = 132,4 mol |

(fortgesetzt)

| Saccharose (Funktionalität 8): | 90700 g / 342,3 g/mol = 246,97 mol |
| Imidazol (Funktionalität 1): | 340 g / 68,08 g/mol = 5,0 mol |
| Polyetherpolyol (Funktionalität 4,3): | 29000 g / 488 g/mol = 59,4 mol |

Starterfunktionalität: (132,4 mol*3 + 246,97 mol*8 + 5,0 mol*1 + 59,4 mol*4,3)/(132,4 mol + 246,97 mol + 5,0 mol + 59,40 mol) = 6,0

Zusammensetzung (Massenprozent):

| Saccharose | 23,3 % |
| Glycerin | 3,2 % |
| Polyetherpolyol | 7,5 % |
| Propylenoxid | 66,0 % |

Polyetherpolyol B):
Ein Druckreaktor mit Rührwerk, Mantelheizung und Kühlung, Dosiereinrichtungen für feste und flüssige Substanzen und Alkylenoxide sowie Einrichtungen zur Stickstoffinertisierung und einem Vakuumsystem wurde auf 80 °C aufgeheizt und mehrmals inertisiert. Es wurde vic-Toluoldiamin in den Reaktor eingefüllt und der Rührer wurde in Betrieb genommen. Anschließend wurde der Reaktor nochmals inertisiert und die Temperatur auf 130 °C erhöht und Propylenoxid wurden dosiert. Nach einer Abreaktion von 2 h wurden die Temperatur auf 100 °C abgesenkt und Dimethylethanolamin zugegeben. Das Zwischenprodukt wurde mit weiterem Propylenoxid umgesetzt. Die Nachreaktion lief für 2 Stunden bei 130 °C. Anschließend wurde die Probe im Stickstoffstrom abgestrippt.

Polyetherpolyol C):
Ein Druckreaktor mit Rührwerk, Mantelheizung und Kühlung, Dosiereinrichtungen für feste und flüssige Substanzen und Alkylenoxide sowie Einrichtungen zur Stickstoffinertisierung und einem Vakuumsystem wurde auf 80 °C aufgeheizt und mehrmals inertisiert. Es wurde vicinales Toluoldiamin zugegeben und der Reaktor wurde mehrmals inertisiert. Die Temperatur wurde auf 130 °C erhöht und das Gemisch wurde bei dieser Temperatur mit einer Mischung aus Ethylenoxid und Propylenoxid (EO:PO = 1:15) versetzt. Nach einer Abreaktion von 2 h wurde eine 50 % wässrige KOH Lösung (Massenprozent) zugegeben. Es folgte eine Vakuumphase von 1 h und anschließend wurden bei 130 °C eines Gemisches von Ethylenoxid und Propylenoxid (EO:PO = 1:15) hinzu dosiert. Nach einer Abreaktion von 3 h wurde die Probe im Stickstoffstrom abgestrippt.

Polyetherpolyol C1):
Ein Druckreaktor mit Rührwerk, Mantelheizung und Kühlung, Dosiereinrichtungen für feste und flüssige Substanzen und Alkylenoxide sowie Einrichtungen zur Stickstoffinertisierung und einem Vakuumsystem wurde auf 80 °C aufgeheizt und mehrmals inertisiert. Anschließend wurde Trimethylolpropan und eine KOH Lösung (50 %, wässrig) hinzugefügt. Anschließend wurde die Temperatur auf 130 °C erhöht und für 2 h eine Startertrocknung bei 10 mbar durchgeführt. Anschließend wurde Propylenoxid bei 130°C zudosiert. Nach einer Abreaktion von 3 h wurde die Probe im Stickstoffstrom abgestrippt.

Polyesteretherpolyol D) und D1:
Ein Druckreaktor mit Rührwerk, Mantelheizung und Kühlung, Dosiereinrichtungen für feste und flüssige Substanzen und Alkylenoxide sowie Einrichtungen zur Stickstoffinertisierung und einem Vakuumsystem wurde auf 80 °C aufgeheizt und mehrmals inertisiert. Es wurde Glycerin, wässrige Imidazollösung (50% Gewichtsprozent), Saccharose sowie Biodiesel (Biodiesel gemäß Norm EN 14214, 2010) bei 25 °C vorgelegt. Anschließend wurde dieser dreimal mit Stickstoff inertisiert. Der Kessel wurde auf 130 °C erhitzt und Propylenoxid hinzu dosiert. Nach einer Abreaktionszeit von 3 h wurde für 60 Minuten unter vollem Vakuum bei 100 °C evakuiert und anschließend auf 25 °C abgekühlt.

III. Einsatzstoffe

Polyole A) bis D) wurden wie vorstehend beschrieben hergestellt.

| Polyol A): | Polyetherpolyol auf Basis von Saccharose, Glycerin und Propylenoxid (PO) mit OH-Zahl von 429 mg KOH/g; Funktionalität: 6,0 |
| Polyol A1): | Polyetherpolyol auf Basis von Saccharose, Glycerin und PO mit OH-Zahl von 450 mg KOH/g; Funktionalität: 5,1 |
| Polyol B): | Polyetherpolyol auf Basis vic-TDA und PO mit OH-Zahl 399 mg KOH/g; Funktionalität: 3,9* |
| Polyol C): | Polyetherpolyol auf Basis vic-TDA, Ethylenoxid (EO) und PO mit OH-Zahl 160 mg KOH/g; Funktionalität: |

3,9*

Polyol C1): Polyetherpolyol auf Basis Trimethylolpropan, PO mit OH-Zahl 160 mg KOH/g; Funktionalität: 2.9**

Polyol D): Polyetheresterpolyol auf Basis Saccharose, Glycerin, PO und Biodiesel (14 Gew.-%), OH-Zahl 420 mg KOH/g; Funktionalität: 4,5

Polyol D1) Polyetheresterpolyol auf Basis Saccharose, Glycerin, PO und Biodiesel (37 Gew.-%), OH-Zahl 280 mg KOH/g

**[0153]** * Die Funktionalität ist bei Polyol B und C < 4.0 aufgrund der Gegenwart geringer Mengen Wasser, die durch Zugabe des Katalysators (wässrige KOH-Lösung) zum Starter TDA hinzugegeben wurden.

** Die Funktionalität ist bei Polyol C1 < 3.0 aufgrund der Gegenwart geringer Mengen Wasser, die durch Zugabe des Katalysators (wässrige KOH-Lösung) zum Starter Trimethylolpropan hinzugegeben wurden.

Katalysatormischung E) bestehend aus:

Katalysator E1): Dimethylcyclohexylamin

Katalysator E2): Pentamethyldiethylentriamin oder Bis(2-dimethylaminoethyl)ether

Katalysator E3): Tris(dimethylaminopropyl)hexahydro-1,3,5-triazin

Katalysator E4): Dimethylbenzylamin

Stabilisator F):

Silikonhaltiger Schaumstabilisator, Tegostab® B8474 und/oder Tegostab® B8491 oder Tegostab® 84204 oder Tegostab 84214® von Evonik

Cyclopentan 70 (CP 70): Cyclopentan/Isopentan-Mischung im Verhältnis 70:30

Cyclopentan 95 (CP 95): Cyclopentan mit 95%iger Reinheit

Mischung E-F-G-1 aus Katalysatormischung E), weiteren Komponenten F) und chemischen Treibmittel G1) aus:

1,5 Gew.-% Katalysatormischung E),

2,0 Gew.-% Propylencarbonat,

3,0 Gew.-% Schaumstabilisator, und

2,5 Gew.-% $H_2O$,

wobei die Gew.-% auf das Gesamtgewicht der Polyolkomponenten A) bis D) plus E-F-G-1 bezogen sind.

Mischung E-F-G-2 aus Katalysatormischung E), weiteren Komponenten F) und chemischen Treibmittel G1) aus:

2,5 Gew.-% der Katalysatormischung E),

2,0 Gew.-% Propylencarbonat,

3,0 Gew.-% Schaumstabilisator, und

2,5 Gew.-% $H_2O$,

wobei die Gew.-% auf das Gesamtgewicht der Polyolkomponenten A) bis D) plus E-F-G-2 bezogen sind.

Weiterhin wurden jeder Polyolkomponente zusätzlich 13,5 Gew.-% Cyclopentan 70 bzw. 95 zugesetzt, bezogen auf das Gesamtgewicht der Polyolkomponenten A) bis D) plus E-F-G-1 bzw. E-F-G-2. Im Falle der Cyclopentan 95-Variante wurde den Rezepturen auf Basis von E-F-G-1 abweichend 14.5 Teile des Treibmittels (Cyclopentan 95) zur Dichteeinstellung zugesetzt.

Isocyanat:

Polymer-MDI mit einem NCO-Gehalt von 31,5 Gew.-% (Lupranat® M20)

IV. PU-Hartschäume

Aus den vorgenannten Einsatzstoffen wurden Polyolkomponenten P) hergestellt, denen vor dem Verschäumen ein physikalisches Treibmittel zugesetzt wurde. Mittels eines Hochdruck-Puromaten® PU 30/80 IQ (Elastogran GmbH) mit einer Austragsmenge von 250 g/s wurden die mit dem physikalischen Treibmittel versetzten Polyolkomponenten P) jeweils mit der erforderlichen Menge des angegebenen Isocyanats vermischt, so dass der gewünschte Isocyanat-Index erreicht wurde.

Die Reaktionsmischung wurde in auf 40 °C temperierte Formwerkzeuge der Abmessungen 2000 mm x 200 mm x 50 mm bzw. 400 mm x 700 mm x 90 mm eingespritzt und dort aufschäumen gelassen. Die Überfüllung betrug 17,5 %, d. h. es wurden 17,5 % mehr Reaktionsmischung eingesetzt, als zum vollständigen Ausschäumen der Form notwendig gewesen wäre.

Die Startzeit, Abbindezeit und frei geschäumte Dichte wurden durch maschinelle Hochdruckvermischung (mittels eines Hochdruck-Puromaten® PU 30/80 IQ) und Einbringung in einen PE-Sack ermittelt. Dabei werden In den PE-Sack (Durchmesser * 30 cm) werden Material eingeschossen. Die Startzeit ist definiert als Zeitspanne zwischen Schussbeginn und Beginn der Volumenexpansion des Reaktionsgemisches. Die Abbindezeit ist die Zeitspanne zwischen Schussbeginn und dem Zeitpunkt, ab dem sich z. B. mittels eines Schaumstreifens Fäden aus dem Reaktionsgemisch ziehen lassen. Wenn keine maschinelle Verarbeitung möglich ist (z.B. aufgrund von Inhomogenitäten der Polyolkomponente) erfolgte die Bestimmung der Startzeit, Abbindezeit und frei geschäumte Dichte mittels Bechertest durch Handverschäumung. Die Komponenten werden dabei auf 20 ± 0,5 °C temperiert. Die Polyolkomponente wurde im entsprechenden Papierbecher vorgelegt, die Isocyanat-Komponente zugewogen und das Reaktionsgemisch gerührt. Bei Rührbeginn wird die Stoppuhr gestartet. Die Startzeit ist hierbei definiert als Zeitspanne zwischen Rührbeginn und dem Anfang der Volumenexpansion des Reaktionsgemisches durch Schaumbildung. Die Abbindezeit (Fadenziehzeit) entspricht der Zeit vom Beginn der Durchmischung bis zum Zeitpunkt des Reaktionsvorganges, an dem sich aus der Schaummasse mit einem Glasstab Fäden heraus-ziehen lassen. Zur Ermittlung der frei geschäumten Dichte bei einem Bechertest wird nach Aushärten des Schaumes die Schaumkrone abgeschnitten. Der Schnitt wird am Rand des Prüfgefäßes senkrecht zur Steigrichtung geführt, so dass Schaumanschnitt und oberer Rand des Prüfgefäßes in einer Ebene liegen. Der Becherinhalt wird gewogen und die freigeschäumte Rohdichte berechnet.

Tabellen 1 und 2 zeigen die eingesetzten Polyolkomponenten P) und die Messergebnisse für die daraus hergestellten PU-Hartschäume (Overpacking OP der Formschäume: 17,5%). Beispiele B1 bis B10 sind erfindungsgemäße Beispiele, Beispiele V1 bis V6 sind Vergleichsbeispiele.

Tabelle 1

| Komponente // Eigenschaft | B1 | B2 | V1 | V2 | B3 | B4 | V3 | B5 | B6 | V4 | V5 |
|---|---|---|---|---|---|---|---|---|---|---|---|
| Polyol A [Gew.-%] | 42 | 42 | 67 | 42 | 47 | 37 | 22 | | 56 | 56 | |
| Polyol A1 [Gew.-%] | | | | | | | | 42 | | | 56 |
| Polyol B [Gew.-%] | 12 | 12 | 12 | 12 | 12 | 12 | 12 | 12 | 12 | 12 | 12 |
| Polyol C [Gew.-%] | 12 | 12 | 12 | 12 | 12 | 12 | 12 | 12 | 12 | 23 | 23 |
| Polyol D [Gew.-%] | 25 | 25 | | | 20 | 30 | 45 | 25 | 11 | | |
| Polyol D1 [Gew.-%] | | | | 25 | | | | | | | |
| Komponente E-F-G-1 [Gew.-%] | 9 | 9 | 9 | 9 | 9 | 9 | 9 | 9 | 9 | 9 | 9 |
| Summe [Gew.-%] | 100 | 100 | 100 | 100 | 100 | 100 | 100 | 100 | 100 | 100 | 100 |
| Cyclopentan | CP 70 | CP 95 | CP 70 | CP70 | CP 70 | CP 70 | CP70 | CP 70 | CP 70 | CP 70 | CP 70 |
| NCO-Index | 124 | 125 | 124 | 124 | 124 | 124 | 124 | 124 | 124 | 125 | 124 |
| Startzeit [s] | 5 | 6 | 13[a] | 6 | 5 | 5 | 6 | 6 | 6 | 6 | 6 |
| Abbindezeit [s] | 62 | 64 | 84[a] | 62 | 62 | 63 | 63 | 61 | 63 | 65 | 64 |
| Frei geschäumte Dichte [g/L] | 22,3 | 21,9 | 27,8[a] | 22,1 | 23,2 | 22,9 | 22,9 | 22,4 | 23 | 23,3 | 23,2 |
| Minimale Fülldichte [g/L] | 29,2 | 29,7 | - | 28,7 | 30,5 | 30 | 29,7 | 29,4 | 30,2 | 30,5 | 30,4 |
| Phasenstabilität mit Cyclopentan [°C] | < 4 | < 5 | instabil[b] | < 4 | < 5 | < 4 | < 4 | < 4 | trüb[c] | < 5 | < 5 |
| Nachexpansion nach 3 min [mm] | - | - | - | - | - | - | - | - | - | - | - |
| Nachexpansion nach 4 min [mm] | 3,0 | 3,4 | - | 3,9 | 3,2 | 3,4 | 3,8 | 3,6 | 3,2 | - | - |
| Nachexpansion nach 5 min [mm] | 1,7 | 2,0 | - | 2,4 | 2 | 2,2 | 2,4 | 2,3 | 2,2 | 2,8 | 2,9 |
| Nachexpansion nach 7 min [mm] | 0,4 | 0,6 | - | 1,0 | 0,7 | 0,7 | 1,0 | 0,9 | 0,8 | 1,4 | 1,3 |
| Druckfestigkeit [N/mm²] bei 34 g/L | 0,155 | 0,146 | - | 0,139 | 0,159 | 0,153 | 0,153 | 0,158 | 0,156 | 0,147 | 0,152 |
| Haftung bei 35°C Formtemperatur [N] | 2,2 | 1,7 | - | 3,7 | 2,6 | 1,4 | 2,6 | 2,8 | 2,5 | 3,6 | 2,8 |
| Wärmeleitfähigkeit [mW/mK] | 21,1 | 20,4 | - | 21,3 | 21,1 | 21,2 | 21,0 | 21,1 | 21,0 | 21,3 | 21,3 |

a: Handverschäumung im Becher, da eine maschinelle Verarbeitung nicht möglich war; b) keine Maschinenverarbeitung möglich; c: phasenstabil bei 20 °C, trotzt Trübung war eine Maschinenverarbeitung möglich,

Tabelle 2

| Komponente // Eigenschaft | B7 | B8 | B9 | B10 | V6 | V7 | V8 |
|---|---|---|---|---|---|---|---|
| Polyol A [Gew.-%] | 45 | 37 | 45 | 45 | 45 | 30 | 45 |
| Polyol A1 [Gew.-%] | | | | | | | |
| Polyol B [Gew.-%] | 30 | 30 | 30 | 30 | 30 | 30 | 30 |
| Polyol C [Gew.-%] | 5 | 3 | 2 | | | | 15 |
| Polyol C1 [Gew.-%] | | | | 2 | | | |
| Polyol D [Gew.-%] | 10 | 20 | 13 | 13 | 15 | 30 | |
| Komponente E-F-G-2 [Gew.-%] | 10 | 10 | 10 | 10 | 10 | 10 | 10 |
| Summe [Gew.-%] | 100 | 100 | 100 | 100 | 100 | 100 | 100 |
| Cyclopentan | CP 95 | CP 95 | CP 95 | CP 95 | CP 95 | CP 95 | CP 95 |
| NCO-Index | 121 | 117 | 121 | 121 | 121 | 117 | 121 |
| Viskosität [mPas] | 5500 | 4800 | 6000 | 5500 | 6200 | 4400 | 7200 |
| Startzeit [s] | 5 | 4 | 4 | 4 | 4 | 4 | 4 |
| Abbindezeit [s] | 42 | 40 | 40 | 41 | 41 | 40 | 41 |
| Frei geschäumte Dichte [g/L] | 22,6 | 22,8 | 23,1 | 23,3 | 23,2 | 22,0 | 22,6 |
| Minimale Fülldichte [g/L] | 30,5 | 30,9 | 30,7 | 31,1 | 30,7 | 29,9 | 30,7 |
| Phasenstabilität mit Cyclopentan [°C] | < 5 | < 5 | <5 | < 5 | <5 | < 5 | < 5 |
| Nachexpansion nach 3 min [mm] | 3,3 | 3,0 | 3,0 | 3,5 | 3,2 | 3,0 | 3,9 |
| Nachexpansion nach 4 min [mm] | 1,7 | 1,5 | 1,5 | 1,8 | 1,6 | 1,5 | 2,6 |
| Nachexpansion nach 5 min [mm] | 0,9 | 0,7 | 0,7 | 1,1 | 0,9 | 0,7 | 1,8 |
| Nachexpansion nach 7 min [mm] | - | - | - | - | - | - | - |
| Druckfestigkeit [N/mm$^2$] bei 34 g/L | 0,163 | 0,157 | 0,158 | 0,157 | 0,165 | 0,171 | 0,179 |
| Haftung bei 35°C Formtemperatur [N] | 3,4 | 2,4 | 2,7 | 3,3 | 1,9 | 1,4 | 4,7 |
| Wärmeleitfähigkeit [mW/mK] | 19,6 | 19,9 | 19,8 | 19,9 | 19,9 | 19,8 | 20,1 |

Aus den in Tabellen 1 und 2 zusammengefassten Ergebnissen ist ersichtlich, dass mit erfindungsgemäßen Polyolkomponenten P hergestellte PU-Hartschäume eine verbesserte Kombination aus vorteilhaften Eigenschaften bezüglich Entformbarkeit (in den Tabellen an niedrigeren Werten für die Nachexpansion erkennbar), guter Haftung und Wärmedämmung aufweisen, wobei die Polyolkomponente P) auch gut mit den unpolaren, als Treibmittel eingesetzten Pentanen verträglich ist und die Bereitstellung maschinell verarbeitbarer, pentanhaltiger Polyolkomponenten ermöglicht.

**Patentansprüche**

1. Polyolkomponente P) umfassend:

a) 35 bis 70 Gew.-% eines oder mehrerer Polyetherpolyole A) mit einer OH-Zahl im Bereich von 300 bis 520 mg KOH/g ausgewählt aus Umsetzungsprodukten von Monosacchariden, Oligosacchariden, Polysacchariden, mehrwertigen Alkoholen, Alkoxylierungsprodukten der vorgenannten Verbindungen oder Mischungen daraus mit Alkylenoxiden;
b) 5 bis 45 Gew.-% eines oder mehrerer Polyetherpolyole B) mit einer OH-Zahl im Bereich von 320 bis 500 mg KOH/g ausgewählt aus Umsetzungsprodukten von aromatischen Diaminen mit Alkylenoxiden;
c) > 0 bis 30 Gew.-% eines oder mehrerer Polyetherpolyole C) mit einer OH-Zahl im Bereich von 100 bis 240 mg KOH/g ausgewählt aus Umsetzungsprodukten von Aminen, mehrwertigen Alkoholen oder Mischungen daraus mit Alkylenoxiden;

d) 5 bis 40 Gew.-% eines oder mehrerer Polyetheresterpolyole D) mit einer OH-Zahl von 380 bis 480 mg KOH/g und einem Gehalt an Fettsäuren von 5 bis 25 Gew.-%, bezogen auf die Polyetheresterpolyole D);
e) gegebenenfalls einen oder mehrere Katalysatoren E);
f) gegebenenfalls eine oder mehrere weiterer Komponenten F) ausgewählt aus Hilfsmitteln und Zusatzstoffen;
g) gegebenenfalls ein oder mehrere Treibmittel ausgewählt aus chemischen Treibmitteln G1) und physikalischen Treibmitteln G2);

wobei sich die Konzentrationsangaben in Gew.-% für A) bis D) auf die Gesamtmenge der Komponenten A) bis G1) der Polyolkomponente P) beziehen.

2. Polyolkomponente P) gemäß Anspruch 1, **dadurch gekennzeichnet, dass** das Polyetherpolyol A) eine Funktionalität im Bereich von 4,6 bis 6,5 aufweist.

3. Polyolkomponente P) gemäß Anspruch 1 oder 2, **dadurch gekennzeichnet, dass** das Polyetherpolyol B) eine Funktionalität im Bereich von 3,0 bis 4,0 aufweist.

4. Polyolkomponente P) gemäß einem der Ansprüche 1 bis 3, **dadurch gekennzeichnet, dass** das Polyetherpolyol B) ausgewählt ist aus den Umsetzungsprodukten von 2,3-, 3,4-, 2,4-, 2,5-, 2,6-Toluylendiamin oder Mischungen daraus mit $C_2$-$C_4$ Alkylenoxiden.

5. Polyolkomponente P) gemäß einem der Ansprüche 1 bis 4, **dadurch gekennzeichnet, dass** das Polyetherpolyol C) eine Funktionalität im Bereich von 2,8 bis 5,0 aufweist.

6. Polyolkomponente P) gemäß einem der Ansprüche 1 bis 5, **dadurch gekennzeichnet, dass** das Polyetherpolyol C) Ethlyenoxid- und Propylenoxideinheiten enthält.

7. Polyolkomponente P) gemäß einem der Ansprüche 1 bis 6, **dadurch gekennzeichnet, dass** das Polyetherpolyol C) Umsetzungsprodukte von Aminen ausgewählt aus Ethylendiamin, 1,3-Propylendiamin, 1,3-, 1,4-Butylendiamin, 1,2-, 1,3-, 1,4-, 1,5-, 1,6-Hexamethylendiamin, Phenylendiamine, 2,3-, 3,4-, 2,4-, 2,5-, 2,6-Toluylendiamin und 4,4'-, 2,4'-, 2,2'-Diaminodiphenylmethan oder Mischungen daraus mit Alkylenoxiden enthält.

8. Polyolkomponente P) gemäß einem der Ansprüche 1 bis 7, **dadurch gekennzeichnet, dass** das Polyetherpolyol C) Umsetzungsprodukte von mehrwertigen Alkoholen ausgewählt aus Glycerin, Trimethylolpropan, Monopropylenglykol, Diethylenglykol, Triethylenglykol, Dipropylenglykol (2,2'-Oxydi-1-propanol, 1,1'-Oxydi-2-propanol, 2-(2-Hydroxypropoxy)-1-propanol) oder Mischungen daraus mit Alkylenoxiden enthält.

9. Polyolkomponente P) gemäß einem der Ansprüche 1 bis 8, **dadurch gekennzeichnet, dass** das Polyetheresterpolyol D) eine Funktionalität von 3,0 bis 5,0 aufweist,

10. Polyolkomponente P) gemäß einem der Ansprüche 1 bis 9, **dadurch gekennzeichnet, dass** das Polyetherpolyol A) eine Funktionalität von 5,7 bis 6,5 aufweist und das Polyetherpolyol B) in einer Menge von 18 bis 40 Gew.-% enthalten ist.

11. Verfahren zur Herstellung von Polyurethan-Hartschaumstoffen durch Umsetzung von:

I) Di- oder Polyisocyanaten PI) oder Gemischen daraus mit
II) einer Polyolkomponente P) gemäß einem der Ansprüche 1 bis 10.

12. Polyurethan-Hartschaumstoff erhältlich durch das Verfahren gemäß Anspruch 11.

13. Verwendung der Polyolkomponente P) gemäß einem der Ansprüche 1 bis 10 zur Herstellung von Polyurethan-Hartschaumstoffen.

14. Verwendung des durch das Verfahren gemäß Anspruch 11 hergestellten Polyurethan-Hartschaumstoffes für Dämm- und Kühlanwendungen.

**Claims**

1.  A polyol component P) comprising:

    a) 35% to 70% by weight of one or more polyether polyols A) having an OH number in the range from 300 to 520 mg KOH/g and selected from reaction products of monosaccharides, oligosaccharides, polysaccharides, polyhydric alcohols, alkoxylation products of the aforementioned compounds or mixtures thereof with alkylene oxides;
    b) 5% to 45% by weight of one or more polyether polyols B) having an OH number in the range from 320 to 500 mg KOH/g and selected from reaction products of aromatic diamines with alkylene oxides;
    c) > 0% to 30% by weight of one or more polyether polyols C) having an OH number in the range from 100 to 240 mg KOH/g and selected from reaction products of amines, polyhydric alcohols or mixtures thereof with alkylene oxides;
    d) 5% to 40% by weight of one or more polyether ester polyols D) having an OH number of 380 to 480 mg KOH/g and a content of fatty acids of 5% to 25% by weight, based on the polyether ester polyols D);
    e) optionally one or more catalysts E);
    f) optionally one or more further components F) selected from auxiliaries and additives;
    g) optionally one or more blowing agents selected from chemical blowing agents G1) and physical blowing agents G2) ;

    where the concentration figures in % by weight for A) to D) are based on the total amount of components A) to G1) of the polyol component P).

2.  The polyol component P) according to claim 1, wherein the polyether polyol A) has a functionality in the range from 4.6 to 6.5.

3.  The polyol component P) according to claim 1 or 2, wherein the polyether polyol B) has a functionality in the range from 3.0 to 4.0.

4.  The polyol component P) according to any of claims 1 to 3, wherein the polyether polyol B) is selected from the reaction products of tolylene-2,3-, -3,4-, - 2,4-, -2,5-, -2,6-diamine or mixtures thereof with $C_2$-$C_4$ alkylene oxides.

5.  The polyol component P) according to any of claims 1 to 4, wherein the polyether polyol C) has a functionality in the range from 2.8 to 5.0.

6.  The polyol component P) according to any of claims 1 to 5, wherein the polyether polyol C) comprises ethylene oxide and propylene oxide units.

7.  The polyol component P) according to any of claims 1 to 6, wherein the polyether polyol C) comprises reaction products of amines selected from ethylenediamine, propylene-1,3-diamine, butylene-1,3-, -1,4-diamine, hexamethylene-1,2-, -1,3-, -1,4-, -1,5-, -1,6-diamine, phenylenediamine, tolylene-2,3-, -3,4-, -2,4-, -2,5-, - 2,6-diamine and 4,4'-, 2,4'-, 2,2'-diaminodiphenylmethane or mixtures thereof with alkylene oxides.

8.  The polyol component P) according to any of claims 1 to 7, wherein the polyether polyol C) comprises reaction products of polyhydric alcohols selected from glycerol, trimethylolpropane, monopropylene glycol, diethylene glycol, triethylene glycol, dipropylene glycol (2,2'-oxydi-1-propanol, 1,1'-oxydi-2-propanol, 2-(2-hydroxypropoxy)-1-propanol) or mixtures thereof with alkylene oxides.

9.  The polyol component P) according to any of claims 1 to 8, wherein the polyether ester polyol D) has a functionality of 3.0 to 5.0.

10.  The polyol component P) according to any of claims 1 to 9, wherein the polyether polyol A) has a functionality of 5.7 to 6.5 and the polyether polyol B) is present in an amount of 18% to 40% by weight.

11.  A process for producing rigid polyurethane foams by reacting:

    I) di- or polyisocyanates PI) or mixtures thereof with
    II) a polyol component P) according to any of claims 1 to 10.

**12.** A rigid polyurethane foam obtainable by the process according to claim 11.

**13.** The use of the polyol component P) according to any of claims 1 to 10 for the production of rigid polyurethane foams.

**14.** The use of the rigid polyurethane foam produced by the process of claim 11 for insulation and refrigeration applications.


**Revendications**

**1.** Composant polyol P) comprenant :

a) 35 à 70 % en poids d'un ou de plusieurs polyétherpolyols A) ayant un indice d'hydroxyle dans la plage de 300 à 520 mg de KOH/g, choisi (s) parmi les produits de réaction de monosaccharides, oligosaccharides, polysaccharides, alcools polyhydriques, de produits d'alcoxylation des composés précités ou de mélanges de ceux-ci avec des oxydes d'alkylène ;
b) 5 à 45 % en poids d'un ou de plusieurs polyétherpolyols B) ayant un indice d'hydroxyle dans la plage de 320 à 500 mg de KOH/g, choisi (s) parmi les produits de réaction de diamines aromatiques avec des oxydes d'alkylène ;
c) > 0 à 30 % en poids d'un ou de plusieurs polyétherpolyols C) ayant un indice d'hydroxyle dans la plage de 100 à 240 mg de KOH/g, choisi(s) parmi les produits de réaction d'amines, d'alcools polyhydriques ou de mélanges de ceux-ci avec des oxydes d'alkylène ;
d) 5 à 40 % en poids d'un ou de plusieurs polyétheresterpolyols D) ayant un indice d'hydroxyle de 380 à 480 mg de KOH/g et une teneur en acides gras de 5 à 25 % en poids, par rapport aux polyétheresterpolyols D) ;
e) éventuellement un ou plusieurs catalyseurs E) ;
f) éventuellement un ou plusieurs composants supplémentaires F) choisi (s) parmi des adjuvants et additifs ;
g) éventuellement un ou plusieurs agents porogènes choisi(s) parmi des agents porogènes chimiques G1) et des agents porogènes physiques G2) ;

les données de concentrations en % en poids pour A) à D) se rapportant à la quantité totale des composants A) à G1) du composant polyol P).

**2.** Composant polyol P) selon la revendication 1, **caractérisé en ce que** le polyétherpolyol A) présente une fonctionnalité dans la plage de 4,6 à 6,5.

**3.** Composant polyol P) selon la revendication 1 ou 2, **caractérisé en ce que** le polyétherpolyol B) présente une fonctionnalité dans la plage de 3,0 à 4,0.

**4.** Composant polyol P) selon l'une quelconque des revendications 1 à 3, **caractérisé en ce que** le polyétherpolyol B) est choisi parmi les produits de réaction de 2,3-, 3,4-, 2,4-, 2,5-, 2,6-toluylène-diamine ou de mélanges de celles-ci avec des oxydes d'alkylène en $C_2$-$C_4$.

**5.** Composant polyol P) selon l'une quelconque des revendications 1 à 4, **caractérisé en ce que** le polyétherpolyol C) présente une fonctionnalité dans la plage de 2,8 à 5,0.

**6.** Composant polyol P) selon l'une quelconque des revendications 1 à 5, **caractérisé en ce que** le polyétherpolyol C) contient des motifs oxyde d'éthylène et oxyde de propylène.

**7.** Composant polyol P) selon l'une quelconque des revendications 1 à 6, **caractérisé en ce que** le polyétherpolyol C) contient des produits de réaction d'amines choisies parmi l'éthylènediamine, la 1,3-propylènediamine, la 1,3-, 1,4-butylènediamine, la 1,2-, 1,3-, 1,4-, 1,5-, 1,6-hexaméthylènediamine, la phénylènediamine, la 2,3-, 3,4-, 2,4-, 2,5-, 2,6-toluylènediamine et le 4,4'-, 2,4'-, 2,2'-diamino-diphénylméthane ou de mélanges de ceux-ci avec des oxydes d'alkylène.

**8.** Composant polyol P) selon l'une quelconque des revendications 1 à 7, **caractérisé en ce que** le polyétherpolyol C) contient des produits de réaction d'alcools polyhydriques choisis parmi le glycérol, le triméthylolpropane, le monopropylèneglycol, le diéthylèneglycol, le triéthylèneglycol, le dipropylène-glycol (2,2'-oxydi-1-propanol, 1,1'-oxydi-2-propanol, 2-(2-hydroxypropoxy)-1-propanol) ou de mélanges de ceux-ci avec des oxydes d'alkylène.

9. Composant polyol P) selon l'une quelconque des revendications 1 à 8, **caractérisé en ce que** le polyétheresterpolyol D) présente une fonctionnalité de 3,0 à 5,0.

10. Composant polyol P) selon l'une quelconque des revendications 1 à 9, **caractérisé en ce que** le polyétherpolyol A) présente une fonctionnalité de 5,7 à 6,5 et le polyétherpolyol B) est contenu en une quantité de 18 à 40 % en poids.

11. Procédé pour la production de mousses rigides de polyuréthane par mise en réaction de :

   I) di- ou polyisocyanates PI) ou de mélanges de ceux-ci avec
   II) un composant polyol P) selon l'une quelconque des revendications 1 à 10.

12. Mousse rigide de polyuréthane pouvant être obtenue par le procédé selon la revendication 11.

13. Utilisation du composant polyol P) selon l'une quelconque des revendications 1 à 10 pour la production de mousses rigides de polyuréthane.

14. Utilisation de la mousse rigide de polyuréthane produite selon la revendication 11 pour des applications d'isolation et frigorifiques.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018177941 A1
- WO 2017072152 A1
- EP 1923417 A1
- WO 2014079271 A1
- WO 2012126912 A2
- EP 2542612 A
- DE 201411

**In der Beschreibung aufgeführte Nicht-Patentliteratur**

- **M. LONESCU.** *Chemistry and Technology of Polyols for Polyurethanes,* 2005, 34-39
- Polyurethanes. **J.H. SAUNDERS ; K.C. FRISCH.** High Polymers. Verlag Interscience Publishers, 1962, vol. 1,2
- Polyurethane. Kunststoff-Handbuch. Hanser-Verlag, 1966, vol. 1,2